# EUROPÄISCHE PATENTSCHRIFT

(11) **EP 3 762 188 B1**
(45) Veröffentlichungstag und Bekanntmachung des Hinweises auf die Patenterteilung: **17.12.2025**
(21) Anmeldenummer: 19718227.2
(22) Anmeldetag: 07.03.2019
(51) Int. Cl.: B25J 9/16, G06Q 10/08, B65G 1/137

(54) **ROBOTERSYSTEM MIT AN WARENTYPEN ANGEPASSTEN BEWEGUNGSABLÄUFEN UND BETRIEBSVERFAHREN HIERFÜR**
ROBOT SYSTEM WITH MOTION SEQUENCES ADAPTED TO PRODUCT TYPES, AND OPERATING METHOD THEREFOR
SYSTÈME DE ROBOT AYANT SCHÉMAS DE MOUVEMENT ADAPTÉS À DES TYPES DE PRODUITS ET SON PROCÉDÉ DE FONCTIONNEMENT

(30) Priorität: 09.03.2018 AT 502062018
(43) Veröffentlichungstag der Anmeldung: 13.01.2021
(73) Patentinhaber: TGW Logistics GmbH, 4614 Marchtrenk (AT)
(72) Erfinder: BEINHOFER, Maximilian, 4600 Thalheim bei Wels (AT); SCHRÖPF, Harald, 4600 Wels (AT)
(74) Vertreter: Burger, Hannes
(86) Internationale Anmeldenummer: PCT/AT2019/060076
(87) Internationale Veröffentlichungsnummer: WO 2019/169418

(56) Entgegenhaltungen:
- EP-A1- 1 986 165
- WO-A1-2016/010968
- WO-A1-2016/100235
- WO-A1-2016/100235
- US-A1- 2008 181 753
- US-A1- 2012 296 469
- US-A1- 2015 057 793
- US-A1- 2015 057 793
- US-A1- 2017 088 360
- US-A1- 2017 088 360
- US-B1- 9 381 645
- US-B1- 9 381 645
- US-B1- 9 827 677

## Beschreibung

Die Erfindung betrifft ein Verfahren zur Steuerung eines Roboters in einem Lager- und Kommissioniersystem, welcher eine gegenüber einer Roboterbasis bewegbare Greifeinheit aufweist, bei dem die Waren mit der Greifeinheit von oder aus einem ersten Warenträger aufgenommen und in oder auf einen zweiten Warenträger abgelegt oder abgeworfen werden. Dabei werden die Waren hinsichtlich eines der physikalischen Parameter: Formstabilität, Druckstabilität, Biegesteifigkeit, Zugfestigkeit, absolutes Gewicht oder spezifisches Gewicht zumindest in Waren einer ersten Type und Waren einer zweiten Type unterschieden, wobei vor dem Aufnehmen einer Ware die Type der Ware ermittelt wird. Zudem wird die besagte Ware mit der Greifeinheit von oder aus dem ersten Warenträger aufgenommen und in oder auf den zweiten Warenträger abgelegt oder abgeworfen, wobei der Roboter und/oder die Greifeinheit (insbesondere eine Bewegung des Roboters und/oder der Greifeinheit) abhängig von der für die genannte Ware ermittelten Type gesteuert wird. Weiterhin betrifft die Erfindung ein Robotersystem mit einem Roboter mit einer gegenüber einer Roboterbasis bewegbaren Greifeinheit zum Aufnehmen von Waren, wobei der Roboter dazu ausgebildet ist, Waren mit der Greifeinheit von oder aus einem ersten Warenträger aufzunehmen und in oder auf einen zweiten Warenträger abzulegen oder abzuwerfen, und einer Robotersteuerung, welche dazu eingerichtet ist, den Roboter anzuweisen, die besagte Ware von oder aus dem ersten Warenträger aufzunehmen und in oder auf den zweiten Warenträger abzulegen oder abzuwerfen. Dabei werden die Waren hinsichtlich eines der physikalischen Parameter: Formstabilität, Druckstabilität, Biegesteifigkeit, Zugfestigkeit, absolutes Gewicht oder spezifisches Gewicht zumindest in Waren einer ersten Type und Waren einer zweiten Type unterschieden. Schließlich betrifft die Erfindung ein Lager- und Kommissioniersystem zum Kommissionieren von Waren, umfassend einen Lagerbereich zum Lagern von Waren und einen Arbeitsplatz zum Kommissionieren/Umpacken von Waren mit einem Robotersystem der obigen Art.

Ein Verfahren, ein Robotersystem und ein Lager- und Kommissioniersystem der genannten Art sind grundsätzlich bekannt. Beispielsweise offenbart die US 9,868,207 B2 hierzu einen Roboter zum Greifen von Waren in einem Lagersystem. Dabei können Informationen zum Greifen der genannten Waren ermittelt und in Verbindung mit einer Datenbank dazu benutzt werden, eine Greifstrategie festzulegen.

Die US 2017/088360 A1 offenbart darüber hinaus Roboterarme oder Manipulatoren, die zum Werfen von Waren innerhalb eines Inventarsystems verwendet werden. Wurfstrategien für die Roboterarme können Informationen darüber enthalten, wie eine ergriffene Ware von einem Roboterarm bewegt und losgelassen werden soll, um eine Flugbahn für die Bewegung der Ware zu einem Aufnahmeort zu erreichen.

Die US 2015/057793 A1 offenbart schließlich ein System und ein Verfahren zum automatischen Aufnehmen von Waren in einer Materialhandhabungseinrichtung. In einer Ausführungsform umfasst das System ein Förderband und eine Roboterhand mit mehreren Fingern, an denen ein oder mehrere Saugnäpfe angebracht sind. Dabei kann ein Entnahmeplan erzeugt werden, welcher die Roboterhand so steuert, dass sie die Ware aufnimmt, während der eine oder die mehreren Saugnäpfe selektiv aktiviert werden.

Nachteilig an den bekannten Verfahren ist, dass sie vergleichsweise unflexibel und wenig geeignet für das Umladen einer Vielzahl an unterschiedlichen Waren sind. Häufig werden spezialisierte Systeme eingesetzt, die nur wenige verschiedene und sich nur gering voneinander unterscheidende Warentypen handhaben können. Viele Umladevorgänge in einem Lager- und Kommissioniersystem werden daher von Lagerarbeitern beziehungsweise Kommissionierern durchgeführt, was insbesondere bei schweren Waren nachteilig für deren Gesundheit ist.

Eine Aufgabe der Erfindung ist es daher, ein verbessertes Verfahren zur Steuerung eines Roboters in einem Lager- und Kommissioniersystem, ein verbessertes Robotersystem sowie ein verbessertes Lager- und Kommissioniersystem zum Kommissionieren von Waren anzugeben. Insbesondere sollen die oben angegebenen Nachteile überwunden werden und die von einem Robotersystem durchgeführten Tätigkeiten ausgeweitet werden.

Diese Aufgabe wird durch ein Verfahren zur Steuerung eines Roboters und ein Robotersystem nach den Ansprüchen 1 und 15 gelöst.

Es ist vorgesehen, dass
(durch die Robotersteuerung) der zumindest eine Sauggreifer beim Aufnehmen einer Ware der ersten Type vor dem Kontakt des zumindest einen Sauggreifers mit der besagten Ware aktiviert wird und beim Aufnehmen einer Ware der zweiten Type nach dem Kontakt des zumindest einen Sauggreifers mit der besagten Ware aktiviert wird,
wobei, falls der physikalische Parameter die Formstabilität ist, Waren der ersten Type einen Elastizitätsmodul von weniger als 1,0 GPa aufweisen und Waren der zweiten Type einen Elastizitätsmodul von mehr als oder gleich 1,0 GPa aufweisen,
   oder
wobei, falls der physikalische Parameter die Druckstabilität ist, Waren der ersten Type einen Druck-Elastizitätsmodul von weniger als 1,0 GPa aufweisen oder bei mittiger Belastung eine Druckfederkonstante von weniger als 0,5 N/cm aufweisen und Waren der zweiten Type einen Druck-Elastizitätsmodul von mehr als oder gleich 1,0 GPa aufweisen oder bei mittiger Belastung eine Druckfederkonstante von mehr als oder gleich 0,5 N/cm aufweisen,
   oder
wobei, falls der physikalische Parameter die Biegesteifigkeit ist, Waren der ersten Type einen Elastizitätsmodul von weniger als 1,0 GPa aufweisen oder eine Biegefederkonstante von weniger als 0,01 Nm/° aufweisen und Waren der zweiten Type einen Elastizitätsmodul von mehr als oder gleich 1,0 GPa aufweisen oder eine Biegefederkonstante von mehr als oder gleich 0,01 Nm/° aufweisen,
   oder
wobei, falls der physikalische Parameter die Zugfestigkeit ist, Waren der ersten Type eine Zugfestigkeit von weniger als 100 N/mm² aufweisen und Waren der zweiten Type eine Zugfestigkeit von mehr als oder gleich 100 N/mm² aufweisen,
   oder
wobei, falls der physikalische Parameter das absolute Gewicht ist, Waren der ersten Type ein Gewicht von weniger als 1 kg aufweisen und Waren der zweiten Type ein Gewicht von mehr als oder gleich 1 kg aufweisen,
   oder
wobei, falls der physikalische Parameter das spezifische Gewicht ist, Waren der ersten Type ein spezifisches Gewicht von weniger als 1 g/cm³ aufweisen und Waren der zweiten Type ein spezifisches Gewicht von mehr als oder gleich 1 g/cm³ aufweisen. Schließlich wird die Aufgabe der Erfindung auch durch ein (weitestgehend automatisiertes) Lager- und Kommissioniersystem nach Anspruch 17 gelöst.

Das Lager- und Kommissioniersystem umfasst ein (vollautomatisiertes) Robotersystem der oben genannten Art, das insbesondere mit dem Lagerbereich fördertechnisch verbunden ist.

Vorschlagsgemäß wird der zumindest eine Sauggreifer insbesondere beim Aufnehmen einer Ware, welche eine der Eigenschaften: leicht verformbar, weich/ nachgiebig, biegeschlaff, unzerbrechlich, leicht, spezifisch leicht aufweist, vor dem Kontakt des zumindest einen Sauggreifers mit der besagten Ware aktiviert. Somit wird der zumindest eine Sauggreifer insbesondere beim Aufnehmen einer Ware, welche eine der Eigenschaften: schwer verformbar, hart/starr, biegestarr, zerbrechlich, schwer, spezifisch schwer aufweist, nach dem Kontakt des zumindest einen Sauggreifers mit der besagten Ware aktiviert. Dabei macht man sich den Umstand zu Nutze, dass Waren der ersten Type aufgrund ihrer Eigenschaften vom Sauggreifer angesaugt werden können, das heißt sich bei Anlegen eines Unterdrucks an den Sauggreifer zum Sauggreifer hin bewegen können. Dementsprechend muss der Sauggreifer beim Aufnehmen von Waren der ersten Type nicht so genau positioniert werden beziehungsweise muss sich nicht so weit zu einer Ware hinbewegen. Ein solches Verhalten ist bei Waren der zweiten Type nicht zu erwarten, weswegen der zumindest eine Sauggreifer erst bei Kontakt mit der betreffenden Ware aktiviert wird und dort für eine vorgegebene Zeitspanne (z.B. etwa 0,2 sek) verharrt, um ein sicheres Ansaugen der Ware zu gewährleisten.

Generell umfasst die Greifeinheit zumindest einen Sauggreifer. Sauggreifer eignen sich zum schnellen Aufnehmen von Waren unterschiedlicher Beschaffenheit, beispielsweise sowohl zum Manipulieren von mehr oder minder starren Körpern (zum Beispiel Schachteln, Kartons und Kunststoffboxen) als auch zum Manipulieren von nachgiebigen und insbesondere biegeschlaffen Körpern (zum Beispiel mit Objekten gefüllte Säcke oder Beutel).

An dieser Stelle wird angemerkt, dass sich das vorgestellte Verfahren beziehungsweise der vorgestellte Roboter sowohl für das Aufnehmen von quaderförmigen Waren eignet, als auch für unregelmäßig geformte Waren, wie zum Beispiel für Säcke oder Beutel. Sowohl quaderförmige Waren als auch unregelmäßig geformte Waren können durch ein einzeln handhabbares Objekt gebildet sein beziehungsweise durch eine einzeln handhabbare Gruppe von Objekten. Konkret kann eine Ware daher beispielsweise als Karton oder Kunststoffbox ausgebildet sein, der/die mit mehreren Objekten gefüllt ist. Gleichermaßen kann eine Ware auch als Sack oder Beutel ausgebildet sein, der mit mehreren Objekten gefüllt ist.

Besonders gut eignet sich das erfindungsgemäße Verfahren beziehungsweise Robotersystem für Waren in Form von Folienbeuteln, insbesondere in Form von sogenannten "Polybags" beziehungsweise "Polybeuteln" aus Polyethylen oder Polypropanol. Solche Folienbeutel werden vorwiegend in der Textilindustrie verwendet und beispielsweise zur Verpackung von T-Shirts, Hemden und dergleichen eingesetzt. Häufig werden solche Folienbeutel auch in der Schuhindustrie oder Lebensmittelindustrie verwendet.

Aufgrund der vorgeschlagenen Maßnahmen sind das vorgestellte Verfahren, das vorgestellte Robotersystem und das vorgestellte Lager- und Kommissioniersystem sehr flexibel einsetzbar und für das Umladen einer Vielzahl an unterschiedlichen Waren geeignet. Dadurch können verschiedene und sich auch stark voneinander unterscheidende Warentypen gehandhabt werden, wodurch die von einem Robotersystem durchgeführten Tätigkeiten gegenüber dem Stand der Technik ausgeweitet werden können. Weiterhin können Lagerarbeiter dahingehend entlastet werden, dass sie weniger oft monotone Umladevorgänge durchführen müssen.

Unter einer "Ware" wird im Rahmen der Erfindung insbesondere ein einzeln handhabbares Objekt beziehungsweise eine einzeln handhabbare Gruppe von Objekten verstanden.

Die "Type" einer Ware gibt deren Beschaffenheit oder die Art einer Ware an. Zur Bestimmung der Type einer Ware wird ein physikalischer Parameter herangezogen.

Beispielsweise können die Waren hinsichtlich ihrer Formstabilität unterschieden werden. Die "Formstabilität" ist ein Maß für die Verformbarkeit einer Ware, also für den Widerstand, den eine Ware einer Verformung entgegensetzt. Waren mit geringer Formstabilität sind demnach "leicht verformbar", Waren mit hoher Formstabilität "schwer verformbar". Denkbar ist es daher, dass Waren der ersten Type leicht verformbar sind und Waren der zweiten Type schwer verformbar sind. Waren der ersten Type weisen einen Elastizitätsmodul von < 1,0 GPa auf und Waren der zweiten Type einen Elastizitätsmodul von ≥ 1,0 GPa.

Die Waren können auch hinsichtlich ihrer Druckstabilität voneinander unterschieden werden. Die "Druckstabilität" ist eine Sonderform der Formstabilität und ein Maß für die Verformbarkeit einer Ware bei einwirkender Druckbelastung. Waren mit geringer Druckstabilität sind "weich/nachgiebig", Waren mit hoher Druckstabilität "hart/starr". Denkbar ist es daher, dass Waren der ersten Type weich/nachgiebig sind und Waren der zweiten Type hart/starr sind. Waren der ersten Type weisen einen Elastizitätsmodul von < 1,0 GPa auf und/oder weisen bei mittiger Belastung eine Druckfederkonstante von < 0,5 N/cm auf. Waren der zweiten Type weisen einen Druck-Elastizitätsmodul von ≥ 1,0 GPa auf und/oder weisen bei mittiger Belastung eine Druckfederkonstante von ≥ 0,5 N/cm auf.

Weiterhin können die Waren hinsichtlich ihrer Biegesteifigkeit voneinander unterschieden werden. Die "Biegesteifigkeit" ist ebenfalls eine Sonderform der Formstabilität und ein Maß für die Verformbarkeit einer Ware bei einwirkender Biegebelastung. Waren mit geringer Biegesteifigkeit sind "biegeschlaff", Waren mit hoher Biegesteifigkeit "biegestarr". Denkbar ist es daher, dass Waren der ersten Type biegeschlaff sind und Waren der zweiten Type biegestarr sind. Waren der ersten Type weisen einen Elastizitätsmodul von < 1,0 GPa auf und/oder weisen eine Biegefederkonstante von < 0,01 Nm/° auf. Waren der zweiten Type weisen einen Elastizitätsmodul von ≥ 1,0 GPa auf und/oder weisen eine Biegefederkonstante
von ≥ 0,01 Nm/° auf.

Ein weiterer physikalischer Parameter zur Unterscheidung der Waren bildet die Festigkeit einer Ware. Die "Festigkeit" ist ein Maß für den Widerstand, den eine Ware einer Zerstörung entgegensetzt. Demnach sind Waren mit geringer Festigkeit "zerbrechlich" und Waren mit hoher Festigkeit "unzerbrechlich". Denkbar ist es daher, dass Waren der ersten Type unzerbrechlich sind und Waren der zweiten Type zerbrechlich sind.

Waren der ersten Type weisen eine Zugfestigkeit von < 100 N/mm² auf und Waren der zweiten Type weisen eine Zugfestigkeit von ≥ 100 N/mm² auf. Waren mit hoher Festigkeit sind zudem tragfähiger als Waren mit geringer Festigkeit und können höher gestapelt werden.

Die Waren können darüber hinaus auch hinsichtlich ihres Gewichts unterschieden werden. Denkbar ist daher, dass Waren der ersten Type leicht sind und Waren der zweiten Type schwer sind. Waren der ersten Type weisen ein Gewicht von < 1 kg auf und Waren der zweiten Type ein Gewicht von ≥ 1 kg.

Ein weiterer physikalischer Parameter zur Unterscheidung der Waren ist durch das spezifische Gewicht derselben gebildet. Das "spezifische Gewicht" ist das Verhältnis der Gewichtskraft eines Körpers zu seinem Volumen. Denkbar ist daher, dass Waren der ersten Type spezifisch leicht sind und Waren der zweiten Type spezifisch schwer sind. Waren der ersten Type weisen ein spezifisches Gewicht von < 1 g/cm³ auf und Waren der zweiten Type ein spezifisches Gewicht von ≥ 1 g/cm³.

Die "Größe" einer Ware kann deren Abmessungen betreffen, also die Länge, Breite und/oder Höhe einer Ware und/oder deren Oberfläche und/oder deren Volumen.

Denkbar ist auch, dass Waren beliebig geformt sind oder ebene Begrenzungsflächen aufweisen und insbesondere quaderförmig oder im wesentlichen quaderförmig sind. Dabei ist anzumerken, dass schwer verformbare, harte/starre und/oder biegestarre Waren ihre geometrische Form in der Regel nicht maßgeblich verändern. Leicht verformbare, weiche/nachgiebige und/oder biegeschlaffe Waren können ihre geometrische Form dagegen maßgeblich verändern und je nachdem der ersten oder zweiten Type angehören. Diese Waren können ihre Zugehörigkeit zu einer Type also im Laufe der Zeit ändern. Ein Beispiel für solche Waren, sind zum Beispiel Kleidungsstücke, die in straff anliegende Folienbeuteln eingepackt sind. Diese Folienbeutel geben den ansonsten eher biegeschlaffen Kleidungsstücken eine gewisse Formstabilität, wodurch ein solches Kleidungsstück im wesentlichen quaderförmig und daher gut stapelbar ist, wenn es auf einer (ebenen) Fläche aufliegt. Hängt es dagegen über die Seitenwand eines Ladehilfsmittels, dann kann das in Folie verpackte Kleidungsstück eine völlig andere Form annehmen, welche maßgeblich von der Quaderform abweicht.

Ein "Warenträger" kann zum Beispiel ein Ladehilfsmittel (etwa ein Karton, ein Tablar oder ein Behälter oder eine Palette) sein oder durch einen Förderer (etwa einen Bandförderer, einen Rollenförderer oder einen Kettenförderer) gebildet sein. Ein "Warenträger" kann aber auch durch eine Transportplattform (etwa auf einem Regalbediengerät oder einem autonomen Transportfahrzeug) gebildet sein. Der erste Warenträger fungiert dabei als "Quelle", der zweite Warenträger als "Ziel". Der zweite Warenträger kann beispielsweise auch durch eine schwenkbare Klappe gebildet sein. In diesem Fall entnimmt der Roboter von oder aus der Quelle eine Ware und legt diese auf der Klappe ab. Danach kann diese Ware beispielsweise durch Betätigen, das heißt Hochschwenken, der Klappe in einen weiteren Behälter abgegeben werden.

Ein "Ladehilfsmittel" kann, wie oben angegeben, durch einen Behälter gebildet sein, etwa durch eine Kiste, durch eine Box oder durch einen Karton. Generell umfasst ein Behälter einen Behälterboden, an diesem aufragende Seitenwände und eine durch die Seitenwände begrenzte Beladeöffnung. Dabei wird angemerkt, dass ein Tablar in der Regel auch Seitenwände aufweist und daher ebenfalls als flacher Behälter aufgefasst werden kann.

Generell kann der erste Warenträger und/oder zweite Warenträger als Ladehilfsmittel oder Fördereinrichtung ausgebildet sein.

In einem "Lager- und Kommissioniersystem" können Waren zum Beispiel an einem Wareneingang angeliefert und übernommen werden, gegebenenfalls umgepackt, und in einem Lager eingelagert werden. Die Waren können auch gemäß einem Auftrag kommissioniert werden, das heißt aus dem Lager ausgelagert, zu einem Auftrag zusammengestellt und am Warenausgang zum Abtransport bereitgestellt werden. Die Waren werden zwischen Wareneingang und Warenausgang nicht substantiell verändert, ganz im Gegensatz zu einem Herstellungsprozess. Eine geringe Formänderung ist aber möglich, insbesondere bei nicht starren Körpern wie zum Beispiel Beuteln oder Säcken oder aber auch bei anderen nachgiebigen Verpackungen, etwa aus Karton oder Kunststoff.

Unter einem "Bewegungsparameter" des Roboters kann zum Beispiel eine Geschwindigkeit und/oder Beschleunigung, mit der die Greifeinheit bewegt wird, verstanden werden, insbesondere deren Minimal- und/oder Maximalwerte. Ein Bewegungsparameter kann auch eine Bahnkurve beeinflussen. Beispielsweise kann der Bewegungsparameter die in einer Bahnkurve verwendeten Mindestradien und/oder Maximalradien definieren. Weitere Beispiele für Bewegungsparameter sind zum Beispiel die Kraft, mit der eine Greifeinheit eine Ware packt, ein Unterdruck, der von den Sauggreifern erzeugt wird, und so weiter.

Für die Unterscheidung der Waren in die zumindest eine erste und zweite Type wird ein Schwellwert herangezogen, welcher einem physikalischen Parameter zugeordnet ist, beispielsweise dem Gewicht der Ware. Der Schwellwert wird in diesem Fall auf 1 kg festgesetzt.

In einer Variante des vorgeschlagenen Verfahrens enthält ein Programm für die Steuerung des Roboters und/oder der Greifeinheit (insbesondere für eine Bewegung des Roboters und/oder der Greifeinheit) zumindest zwei Programmzweige, wobei anhand der Type der aufzunehmenden Ware ein für die besagte Type bestimmter Programmzweig durchlaufen wird. In diesem Fall ist in der Robotersteuerung ein Programm für die Steuerung des Roboters und/oder der Greifeinheit (insbesondere für eine Bewegung des Roboters und/oder der Greifeinheit) gespeichert, das zumindest zwei Programmzweige enthält, wobei anhand der Type der aufzunehmenden Ware ein für die besagte Type bestimmter Programmzweig durchlaufen wird. Das heißt, dass die Type der Ware direkt Einfluss auf den Ablauf des besagten Programms nimmt. Durch diese Maßnahmen können sich die für die verschiedenen Typen der Waren vorgesehenen Bewegungsabläufe in sehr komplexer Weise voneinander unterscheiden.

Alternativ oder zusätzlich ist es auch denkbar, dass
in einer Datenbank Bewegungsparameter für den Roboter gespeichert werden, welche den physikalischen Parameter und oder den Typen der Waren zugeordnet sind,
ein Bewegungsparameter für den Roboter anhand der Type der aufzunehmenden Ware aus der Datenbank ausgelesen wird, und
die Bewegung des Roboters anhand des ausgelesenen Bewegungsparameters gesteuert wird.

Bei dieser Variante nimmt die Type einer Ware also Einfluss auf den für die Steuerung des Roboters vorgesehenen Bewegungsparameter. Beispielsweise kann als Bewegungsparameter eine Geschwindigkeit und/oder eine Beschleunigung der Greifeinheit vorgesehen werden.

Denkbar ist, dass die vorgeschlagenen Maßnahmen alleine oder in Kombination angewandt werden. Dementsprechend kann die Type einer Ware Einfluss auf den Programmablauf und/oder auf Bewegungsparameter des Robotersystems nehmen.

Eine physikalische Eigenschaft respektive ein physikalischer Parameter einer Ware kann vorteilhaft mit Hilfe eines Sensorsystems ermittelt werden. Beispielsweise kann das Sensorsystem dazu einen Sensor aufweisen, der die betreffende physikalische Eigenschaft direkt ermittelt. Für die Ermittlung des Gewichts einer Ware kann somit beispielsweise eine Waage eingesetzt werden. Die Eigenschaft einer Ware kann aber auch indirekt über das Sensorsystem ermittelt werden. Hierbei wird eine Ware mithilfe des Sensorsystems identifiziert und in Folge ein die identifizierte Ware betreffender Datensatz aus einer Datenbank ausgelesen, welcher die gewünschte Eigenschaft respektive den physikalischen Parameter der Ware enthält. Beispielsweise wird einer Artikelnummer einer Ware in dem betreffenden Datensatz die Druckstabilität der Ware zugeordnet, und so weiter. Zur Identifikation der Ware (also zum Bestimmen beispielsweise der Artikelnummer der Ware) kann das Sensorsystem zum Beispiel eine Kamera, ein Barcode-Lesegerät und/oder ein RFID-Lesegerät umfassen.

Denkbar ist auch dass, die Identifikation einer Ware ohne die Zuhilfenahme eines Sensorsystems des Robotersystems erfolgt. Beispielsweise kann ein zentraler Rechner des Lager- und Kommissioniersystems Kenntnis darüber haben, an welcher Stelle in dem Lager- und Kommissioniersystem sich eine bestimmte Ware befindet. Damit kann der zentrale Rechner auch Kenntnis darüber haben, welche Ware oder welche Waren sich im Wirkungsbereich des Roboters befinden. Beispielsweise können Signale der Antriebe der Warenträger für die Ortsbestimmung der Waren innerhalb des Lager- und Kommissioniersystems ausgewertet werden, etwa Signale von Drehgebern in einer Förderrolle.

Der Datensatz, in dem einer Ware eine physikalische Eigenschaft respektive ein physikalischer Parameter dieser Ware zugeordnet ist, kann in einer Roboter-Datenbank des Robotersystems enthalten sein und/oder in einer zentralen Datenbank, welche Bestandteil eines zentralen Rechners ist oder mit diesem zentralen Rechner verbunden ist. Dementsprechend weist das Robotersystem in letzterem Fall eine Schnittstelle zu einem zentralen Rechner eines Lager- und Kommissioniersystems auf, welcher den besagten Datensatz (die physikalische Eigenschaft / der physikalische Parameter) zur Verfügung stellt respektive von welchem der besagte Datensatz (die physikalische Eigenschaft / der physikalische Parameter) bezogen wird. Beispielsweise könnte ein Datensatz für das Gewicht einer Ware wie untenstehend aussehen:

| Identifikationsnummer | Warengewicht |
|---|---|
| 15689090 | 1 kg |

In Folge kann die identifizierte Ware mithilfe der ermittelten Eigenschaft / dem ermittelten Parameter einer ersten Type oder einer zweiten Type zugeordnet werden. Dabei kann die Ware explizit einer bestimmten Type zugeordnet werden, also zum Beispiel der Gruppe der leichten Waren oder der schweren Waren. Ein beispielhafter Programmablauf für die Zuordnung einer Ware zu einer bestimmten Type anhand des Warengewichts kann beispielsweise wie untenstehend aussehen:

```
 WENN Ware > 1 kg DANN
      Warentype = schwer
 ENDE
```

Wenn nur zwei Warentypen vorgesehen sind, dann kann die Zuordnung einer Ware zu einer bestimmten Type anhand des Warengewichts beispielsweise wie folgt aussehen:

```
 WENN Ware > 1 kg DANN
      Warentype = schwer
 SONST
      Warentype = leicht
 ENDE
```

Bei mehr als zwei Warentypen, können dementsprechend mehrere WENN-DANN-Zuweisungen erfolgen.

Die Steuerung des Roboters kann jedoch auch aufgrund einer impliziten Zuordnung der Ware zu einer bestimmten Type erfolgen, beispielsweise in dem die ermittelte physikalische Eigenschaft / der physikalische Parameter (also zum Beispiel das ermittelte Gewicht) mit einem Schwellwert für diese Eigenschaft / diesen Parameter verglichen wird.

Im ersten Fall wird also danach gefragt, ob die Ware leicht oder schwer ist, wohingegen im zweiten Fall das ermittelte Gewicht für die Beantwortung dieser Frage herangezogen wird. Untenstehend wird das Gesagte an zwei einfachen Bedingungen, die in einem Programmablauf für die Steuerung des Roboters enthalten sein können, erläutert:

```
 WENN Ware = schwer DANN
      Programmablauf Bewegungssteuerung für schwere Waren
 ENDE
```

```
WENN Warengewicht > 1 kg DANN
      Programmablauf Bewegungssteuerung für Waren mit Gewicht > 1 kg
 ENDE
```

Der obige Programmablauf kann auch Sprünge in Unterprogramme umfassen. Eine WENN-DANN-Abfrage kann natürlich auch zur Bestimmung eines Bewegungsparameters des Roboters herangezogen werden, so wie das untenstehend am Beispiel der Geschwindigkeits-Einstellung für die Greifeinheit illustriert wird:

```
 WENN Ware = schwer DANN
      Geschwindigkeit = 1 m/s
 ENDE
```

```
 WENN Warengewicht > 1 kg DANN
      Geschwindigkeit = 1 m/s
 ENDE
```

Bei den Beispielen handelt es sich um Pseudocode-Segmente. In der Realität können entsprechende Code-Segmente natürlich in einer anderen Sprache abgefasst sein und/oder eine andere Struktur aufweisen.

Wenn die Waren explizit anhand ihrer Type in zumindest Waren einer ersten Type und Waren einer zweiten Type unterschieden werden, dann ist die Ermittlung einer physikalischen Eigenschaft einer Ware nicht unbedingt erforderlich, sondern es kann die Type einer Ware auch ohne explizite Ermittlung der betreffenden physikalischen Eigenschaft festgestellt werden.

Hierbei wird eine Ware wiederum mithilfe des Sensorsystems des Robotersystems identifiziert, oder die Identifikation der Ware erfolgt mithilfe des zentralen Rechners, so wie das obenstehend an einem Beispiel erläutert wurde. In Folge wird ein die identifizierte Ware betreffender Datensatz aus einer Datenbank ausgelesen, welcher die gewünschte Type der Ware enthält. Beispielsweise wird einer Artikelnummer einer Ware in dem betreffenden Datensatz die Type der Druckstabilität der Ware zugeordnet, also beispielsweise "zerbrechlich" oder "nicht zerbrechlich", und so weiter. Zur Identifikation der Ware (also zum Bestimmen beispielsweise der Artikelnummer der Ware) kann das Sensorsystem auch in diesem Fall eine Kamera, ein Barcode-Lesegerät und/oder ein RFID-Lesegerät umfassen.

Der Datensatz kann wiederum in einer Roboter-Datenbank des Robotersystems enthalten sein und/oder in einer zentralen Datenbank, welche Bestandteil eines zentralen Rechners ist oder mit diesem zentralen Rechner verbunden ist. Dementsprechend weist das Robotersystem auch in diesem Fall eine Schnittstelle zu einem zentralen Rechner eines Lager- und Kommissioniersystems auf, welcher den besagten Datensatz (die Type der Ware) zur Verfügung stellt respektive von welchem der besagte Datensatz (die Type der Ware) bezogen wird. Beispielsweise könnte ein Datensatz für die Type einer Ware wie untenstehend aussehen:

| Identifikationsnummer | Warentype |
|---|---|
| 15689090 | schwer |

In diesem Fall sind jene bereits oben genannten, beispielhaften Pseudocode-Segmente von Relevanz, die auf die Type der Ware bezogen sind. Wie bereits erwähnt wurde, ist die Ermittlung der physikalischen Eigenschaft, welche für die Bestimmung der Type der Ware respektive für die Gruppenzugehörigkeit der Ware zu einer Type herangezogen wird, nicht unbedingt erforderlich, so wie das auch an den obenstehenden Code-Segmenten deutlich wird.

In den vorangehenden Beispielen wurde ein Wert eines Bewegungsparameters in einem Programmabschnitt beziehungsweise Codesegment des Programms für die Steuerung des Roboters festgelegt. Denkbar ist aber auch, dass der betreffende Bewegungsparameter in einem Datensatz gespeichert ist, in dem der Bewegungsparameter
einer Identifikation einer Ware, oder
eine Eigenschaft / einem Parameter einer Ware, oder
einer Type einer Ware
zugeordnet ist.

Beispielsweise könnten Datensätze für die Geschwindigkeit des Greifkopfs demzufolge wie untenstehend aussehen:

| Identifikationsnummer | Geschwindigkeit |
|---|---|
| 15689090 | 1 m/s |

| Warengewicht | Geschwindigkeit |
|---|---|
| 1 kg | 1 m/s |

| Warentype | Geschwindigkeit |
|---|---|
| schwer | 1 m/s |

Die betreffenden Datensätze können wiederum in einer Roboter-Datenbank des Robotersystems enthalten sein und/oder in einer zentralen Datenbank, welche Bestandteil eines zentralen Rechners ist oder mit diesem zentralen Rechner verbunden ist. Dementsprechend weist das Robotersystem auch in diesem Fall eine Schnittstelle zu einem zentralen Rechner eines Lager- und Kommissioniersystems auf, welcher den besagten Datensatz (den Bewegungsparameter) zur Verfügung stellt respektive von welchem der besagte Datensatz (der Bewegungsparameter) bezogen wird.

Die Identifikation einer Ware, die Bestimmung einer Eigenschaft einer Ware und die Bestimmung einer Type einer Ware kann in der schon oben beschriebenen Weise erfolgen. Insbesondere kann dazu, wie bereits erwähnt, ein Sensorsystem des Robotersystems eingesetzt werden und/oder ein zentraler Rechner beziehungsweise eine zentrale Datenbank des Lager- und Kommissioniersystems.

In den obenstehenden Beispielen wurde davon ausgegangen, dass eine physikalische Eigenschaft / ein physikalischer Parameter einer Ware und/oder die Type einer Ware von einer zentralen Steuerung beziehungsweise aus einer zentralen Datenbank bezogen wird, mit deren Hilfe in Folge der Bewegungsablauf des Roboters beeinflusst wird. Denkbar ist aber auch, dass von der zentralen Steuerung beziehungsweise aus der zentralen Datenbank direkt Programmabschnitte in Form von Codesegmenten bezogen werden, die in Folge in die Robotersteuerung geladen werden. Diese Programmabschnitte oder Codesegmente können sich für verschiedene Wareneigenschaften beziehungsweise Warentypen voneinander unterscheiden und können auch als "Applets" (Kurzform für "Application Snippet") bezeichnet respektive aufgefasst werden. Denkbar wäre auch, dass von der zentralen Steuerung beziehungsweise aus der zentralen Datenbank Zeiger (Pointer) auf Programmabschnitte oder Codesegmente bezogen werden, die sich für verschiedene Wareneigenschaften beziehungsweise Warentypen voneinander unterscheiden.

Das Laden von Programmabschnitten oder Codesegmenten (Applets) von einer zentralen Steuerung oder aus einer zentralen Datenbank in die Robotersteuerung des Robotersystems ist insbesondere dann von Vorteil, wenn in einem Lager- und Kommissioniersystem eine Vielzahl an Robotern mit gleichen oder ähnlichen Aufgaben und/oder von gleicher oder ähnlicher Type eingesetzt werden. Dadurch kann die Wartung der Roboter beziehungsweise die Adaptierung der Roboter an unterschiedliche Aufgaben vereinfacht werden, indem diese Programme Abschnitte oder Codesegmente zentral verwaltet und damit zentral verändert werden können.

Denkbar wäre alternativ aber auch, dass die besagten Programmabschnitte in einer Roboter-Datenbank gespeichert sind und beispielsweise in Abhängigkeit einer Wareneigenschaft oder einer Warentype in die Robotersteuerung geladen werden.

Weitere vorteilhafte Ausgestaltungen und Weiterbildungen der Erfindung ergeben sich nun aus den Unteransprüchen sowie aus der Beschreibung in Zusammenschau mit den Figuren.

Vorteilhaft ist es weiterhin, wenn die Greifeinheit zumindest einen Sauggreifer umfasst und wenn eine Kontaktebene des zumindest einen Sauggreifers beim Aufnehmen einer Ware der ersten Type um bis zu 70° gegenüber einer Greiffläche der Ware geneigt wird, wohingegen die besagte Kontaktebene beim Aufnehmen einer Ware der zweiten Type um maximal 20° gegenüber einer Greiffläche der Ware geneigt wird. Dementsprechend wird der zumindest eine Sauggreifer insbesondere beim Aufnehmen einer Ware, welche eine der Eigenschaften: leicht verformbar, weich/nachgiebig, biegeschlaff, unzerbrechlich, leicht, spezifisch leicht aufweist, um bis zu 70° gegenüber einer Greiffläche der Ware geneigt. Somit wird der zumindest eine Sauggreifer insbesondere beim Aufnehmen einer Ware, welche eine der Eigenschaften: schwer verformbar, hart/starr, biegestarr, zerbrechlich, schwer, spezifisch schwer aufweist, um maximal 20° gegenüber einer Greiffläche der Ware geneigt. Dabei macht man sich den Umstand zu Nutze, dass die Waren der ersten Type nachgiebig sind und eine Greiffläche der Ware, welche nicht im Wesentlichen parallel zu der Kontaktebene des Sauggreifers ausgerichtet ist, beim Absenken der Greifeinheit auf die betreffende Ware "zurecht gedrückt" werden kann. Dadurch entfällt die Notwendigkeit, die Kontaktebene bei jedem Aufnehmen einer Ware an eine (zufällig) vorgegebene Ausrichtung einer Greiffläche der aufzunehmenden Ware anpassen zu müssen, wodurch der Umladevorgang oder Kommissioniervorgang schneller ablaufen kann als dies im Stand der Technik möglich ist. Eine Greiffläche einer Ware der zweiten Type lässt sich dagegen aufgrund der speziellen physikalischen Eigenschaften in der Regel nicht zurecht drücken, weswegen die Kontaktebene des zumindest einen Sauggreifers beim Aufnehmen einer Ware der zweiten Type parallel oder im Wesentlichen parallel zu einer Greiffläche der Ware ausgerichtet wird.

Vorteilhaft ist es darüber hinaus, wenn eine Kollision der Greifeinheit mit einer anderen als der aufzunehmenden Ware vermieden wird, wenn es sich bei der anderen Ware um eine Ware der zweiten Type handelt und zugelassen wird, wenn es sich bei der anderen Ware um eine Ware der ersten Type handelt. Dementsprechend wird eine Kollision insbesondere mit einer Ware, welche eine der Eigenschaften: schwer verformbar, hart/starr, biegestarr, zerbrechlich, schwer, spezifisch schwer aufweist, vermieden, wohingegen eine Kollision insbesondere mit einer Ware, welche eine der Eigenschaften: leicht verformbar, weich/nachgiebig, biegeschlaff, unzerbrechlich, leicht, spezifisch leicht aufweist, zugelassen wird. Dabei macht man sich den Umstand zu Nutze, dass die Waren der ersten Type aufgrund ihrer Eigenschaften in der Regel unempfindlicher gegenüber Kollisionen mit der Greifeinheit sind. Der Aufwand für die Positionierung der Greifeinheit kann daher geringer gehalten werden, was sich in kürzeren Zykluszeiten niederschlägt. Bei Waren der zweiten Type wird dagegen besonders darauf geachtet, diese nicht zu beschädigen. Durch die vorgeschlagenen Maßnahmen wird somit ein guter Kompromiss für den Aufwand zur Positionierung der Greifeinheit erreicht.

Vorteilhaft ist es weiterhin, wenn die maximale Geschwindigkeit der Greifeinheit bei Waren der ersten Type höher ist als bei Waren der zweiten Type und/oder die maximale Beschleunigung der Greifeinheit bei Waren der ersten Type höher ist als bei Waren der zweiten Type. Dementsprechend wird eine Ware, welche insbesondere eine der Eigenschaften: leicht verformbar, weich/nachgiebig, biegeschlaff, unzerbrechlich, leicht, spezifisch leicht aufweist, schneller bewegt und/oder stärker beschleunigt als eine Ware, welche insbesondere eine der Eigenschaften: schwer verformbar, hart/starr, biegestarr, zerbrechlich, schwer, spezifisch schwer aufweist. Dabei macht man sich den Umstand zu Nutze, dass die Waren der ersten Type aufgrund ihrer Eigenschaften in der Regel unempfindlicher und von der Greifeinheit sicherer zu halten sind als die Waren der zweiten Type. Damit wird ein guter Kompromiss zwischen schneller Abarbeitung des Umladevorgangs und der dabei auftretenden Fehler (zum Beispiel Herunterfallen einer Ware von der Greifeinheit oder Beschädigungen einer Ware) erzielt.

Vorteilhaft ist es zudem, wenn für Waren der zweiten Type eine bestimmte Zielposition in oder auf dem zweiten Warenträger berechnet wird, wohingegen für Waren der ersten Type ein Zielbereich mit mehreren möglichen Zielpositionen in oder auf dem zweiten Warenträger berechnet wird. Dementsprechend wird für eine Ware, welche insbesondere eine der Eigenschaften: schwer verformbar, hart/starr, biegestarr, zerbrechlich, schwer, spezifisch schwer aufweist, eine bestimmte Zielposition berechnet, wohingegen für eine Ware, welche insbesondere eine der Eigenschaften: leicht verformbar, weich/nachgiebig, biegeschlaff, unzerbrechlich, leicht, spezifisch leicht aufweist, ein Zielbereich mit mehreren möglichen Zielposition zugelassen wird. Dabei macht man sich den Umstand zu Nutze, dass die Wahrscheinlichkeit, dass sich Waren der ersten Type beim Ablegen oder Abwerfen vergleichsweise stark verformen, relativ groß ist. Ein übermäßiger Aufwand für die Positionierung von Waren der ersten Type erscheint daher überflüssig und wird entsprechend der vorgeschlagenen Maßnahmen gering gehalten. Waren der zweiten Type verformen sich dagegen weniger und können daher auch gut gestapelt werden, weswegen eine exakte Positionierung sinnvoll ist. Durch die vorgeschlagenen Maßnahmen wird der Rechenaufwand für die Berechnung einer Zielposition gering gehalten, ohne auf die Möglichkeit zu verzichten, Waren der zweiten Type zu stapeln.

Besonders vorteilhaft ist es weiterhin, wenn eine benachbart zu einer Seitenwand des Ladehilfsmittels liegende Ware der ersten Type beim Aufnehmen gegen die besagte Seitenwand gedrückt wird, wohingegen eine benachbart zu einer Seitenwand des Ladehilfsmittels liegende Ware der zweiten Type beim Aufnehmen ohne Druck auf die besagte Seitenwand aus dem Ladehilfsmittel entnommen wird. Dementsprechend wird eine Ware, welche insbesondere eine der Eigenschaften: leicht verformbar, weich/nachgiebig, biegeschlaff, unzerbrechlich, leicht, spezifisch leicht aufweist, beim Aufnehmen gegen die Seitenwand des Ladehilfsmittels gedrückt. Somit wird eine Ware, welche insbesondere eine der Eigenschaften: schwer verformbar, hart/starr, biegestarr, zerbrechlich, schwer, spezifisch schwer aufweist, beim Aufnehmen ohne Druck auf die Seitenwand des Ladehilfsmittels entnommen. Durch die vorgeschlagenen Maßnahmen kann eine Greiffläche für Waren der ersten Type für die Greifeinheit "zurecht gedrückt" und so ausgerichtet werden, dass sie durch die Greifeinheit leicht gegriffen werden kann. Dies ist unter Umständen schneller, als die Greifeinheit exakt zu einer vorhandenen Greiffläche auszurichten. Bei Waren der zweiten Type besteht dagegen in der Regel keine Möglichkeit, eine Greiffläche zu "zurecht zu drücken" oder eine vorhandene Greiffläche beliebig zu verformen. Durch die vorgeschlagenen Maßnahmen wird daher ein guter Kompromiss im Hinblick auf die für das Aufnehmen einer Ware nötige Zeit erzielt.

Besonders vorteilhaft ist es hinaus, wenn Waren der ersten Type in oder auf den zweiten Warenträger abgeworfen werden, wohingegen Waren der zweiten Type in oder auf den zweiten Warenträger abgelegt werden. Dementsprechend wird eine Ware, welche insbesondere eine der Eigenschaften: leicht verformbar, weich/nachgiebig, biegeschlaff, unzerbrechlich, leicht, spezifisch leicht aufweist, in oder auf den zweiten Warenträger abgeworfen. Somit wird eine Ware, welche insbesondere eine der Eigenschaften: schwer verformbar, hart/starr, biegestarr, zerbrechlich, schwer, spezifisch schwer aufweist, in oder auf den zweiten Warenträger abgelegt. Dabei macht man sich den Umstand zu Nutze, dass Waren der ersten Type einerseits relativ unempfindlich sind, andererseits die Einhaltung einer exakten Zielposition ohnehin schwierig ist und zur Optimierung der Packdichte im zweiten Warenträger weniger entscheidend ist. Im Gegensatz dazu sind Waren der zweiten Type vergleichsweise empfindlich gegenüber Beschädigungen und die Einhaltung einer exakten Zielposition ist vergleichsweise einfach und wegen der Stapelmöglichkeit auch zweckmäßig.

In obigen Zusammenhang kann eine Ware der ersten Type mithilfe des Roboters vertikal über eine für die Ware berechnete Zielposition oder vertikal über einen für die Ware berechneten Zielbereich bewegt und sodann losgelassen werden. Durch das Abwerfen der Ware in oder auf den zweiten Warenträger kann der Beladevorgang besonders schnell ausgeführt werden, weil das Absenken der Greifeinheit in oder auf den zweiten Warenträger, so wie es beim Ablegen von Waren nötig ist, entfällt. Zudem kann der Aufwand für die Berechnung der Position der Greifeinheit, an der die Ware losgelassen wird, bei dieser Ausführungsvariante sehr gering gehalten werden.

Denkbar ist aber auch, dass eine Ware der ersten Type mithilfe des Roboters an eine Loslass-Position bewegt und dort losgelassen wird, welche vertikal über und seitlich neben einer für die Ware berechnete Zielposition oder vertikal über und seitlich neben einen für die Ware berechneten Zielbereich, sowie am Startpunkt einer an die besagte Zielposition / in den besagten Zielbereich führenden Wurfparabel liegt, für deren Berechnung zumindest die Bewegungsgeschwindigkeit und Bewegungsrichtung der Greifeinheit an der Loslass-Position herangezogen wird. Durch die vorgeschlagenen Maßnahmen kann der Weg, den die Greifeinheit für das Abwerfen einer Ware zurücklegen muss, weiter reduziert werden. Insbesondere ist die Bewegungsrichtung der Greifeinheit an der Loslass-Position horizontal oder schräg nach oben gerichtet, wodurch eine Ware relativ weit geworfen werden kann. Der Umladevorgang oder Kommissioniervorgang kann durch die vorgeschlagenen Maßnahmen somit gegenüber dem Stand der Technik deutlich beschleunigt werden.

Besonders vorteilhaft ist es weiterhin, wenn ein unbeabsichtigtes Herunterfallen der aufgenommenen Ware von der Greifeinheit sowie das unbeabsichtigte Ablegen/Abwerfen einer Ware außerhalb eines Toleranzbereiches rund um die berechnete Zielposition für die besagte Ware als Fehler gewertet wird und die Geschwindigkeit und/oder Beschleunigung der Greifeinheit reduziert wird, wenn die Anzahl der Fehler pro Zeiteinheit einen ersten vorgebbaren Schwellwert überschreitet und/oder erhöht wird, wenn die Anzahl der Fehler pro Zeiteinheit einen zweiten vorgebbaren Schwellwert unterschreitet. Auf diese Weise kann das Verfahren zum Umladen/Kommissionieren von Waren adaptiv an sich verändernde Gegebenheiten angepasst werden. Dazu müssen nicht umständlich Eigenschaften von Waren und deren Eignung für das Aufnehmen durch die Greifeinheit ermittelt werden, sondern man macht sich den Umstand zu Nutze, dass sich diese Eignung an der zeitlichen Rate der auftretenden Fehler ablesen lässt. Somit wird stets ein Optimum für die Umlade-Geschwindigkeit beziehungsweise Kommissionier-Geschwindigkeit bei vorgegebener Fehlerrate erreicht.

Günstig ist es auch wenn Waren der ersten Type und Waren der zweiten Type mit derselben Greifeinheit aufgenommen und abgelegt/abgeworfen werden. Dadurch kann Zeit für einen Wechsel der Greifeinheit eingespart werden und das Umladen/Kommissionieren von Waren zügig erfolgen.

Günstig ist es weiterhin, wenn die Waren gemäß einem Auftrag
mit Hilfe des ersten Warenträgers zum Roboter transportiert werden,
mit Hilfe des Roboters von oder aus dem ersten Warenträger in oder auf den zweiten Warenträger umgeladen werden, und
mit Hilfe des zweiten Warenträgers vom Roboter weg transportiert werden.

Bei dieser Variante werden die Waren zum Roboter transportiert, beispielsweise direkt auf einem Bandförderer, einem Rollenförderer oder einem Kettenförderer, beziehungsweise mit einem Ladehilfsmittel auf einem Bandförderer, einem Rollenförderer oder einem Kettenförderer. Der Roboter kann daher statisch an einem Ort verbleiben. Grundsätzlich wäre es aber auch vorstellbar, dass der Roboter als mobiler Roboter ausgebildet ist, insbesondere als mobiler Gelenkarmroboter oder als mobiler Portalroboter. Beispielsweise kann der Roboter auf einem autonomen Transportfahrzeug (engl.: Automated Guided Vehicle, kurz "AGV") aufgebaut sein.

Wie bereits weiter oben erwähnt, kann ein Sensorsystem eine Kamera, ein Barcode-Lesegerät, ein RFID-Lesegerät und/oder eine Waage aufweisen. Günstig ist es darüber hinaus, wenn das Sensorsystem einen Raumtiefensensor und/oder einen Laserscanner und/oder einen Ultraschallsensor umfasst. Mithilfe dieser Sensoren kann die Lage und Position einer Ware in oder auf einem Warenträger ermittelt und für das Greifen durch die Greifeinheit herangezogen werden. Mit einer Kamera (Stereokamera), einem Raumtiefensensor, einem Laserscanner oder einem Ultraschallsensor kann ein dreidimensionales Abbild der in oder auf dem Warenträger liegenden Waren erfasst werden. Ein dreidimensionales Abbild kann jedoch auch aus mehreren, aus verschiedenen Blickwinkeln aufgenommenen, zweidimensionalen Abbildern generiert werden. Diese zweidimensionalen Abbilder können beispielsweise von stereometrisch angeordneten Kameras stammen oder aber auch während einer Relativbewegung zwischen Ware und Kamera aufgenommen werden. Dabei kann sich die (einzige) Kamera gegenüber der unbewegten Ware bewegen oder umgekehrt. Durch die dreidimensionale Erfassung der in oder auf dem Warenträger liegenden Waren kann auch eine Oberflächenstruktur der Waren ermittelt und die Eignung für das Greifen durch die Greifeinheit festgestellt werden.

Beispielsweise eignen sich stark konvexe Oberflächen weniger für das Greifen durch einen Sauggreifer, wohingegen ebene Flächen besonders gut für das Greifen durch einen Sauggreifer geeignet sind. Eine Kamera eignet sich insbesondere auch dazu, eine Oberflächenbeschaffenheit der aufzunehmenden Ware, beispielsweise einen Aufdruck auf eine Verpackung, zu erfassen.

Günstig ist es zudem, wenn der Roboter als Gelenkarmroboter oder Portalroboter ausgebildet ist. Diese Bauformen stellen bewährte und erprobte Mittel zum Manipulieren von Waren dar und sind am Markt in vielfältiger Art verfügbar.

Schließlich ist es von Vorteil, wenn der Arbeitsplatz des Lager- und Kommissioniersystems zum vollautomatisierten Kommissionieren von Waren ausgebildet ist, und eine erste Fördertechnik zum Transport von Waren in oder auf ersten Warenträgern (Lagerladehilfsmittel, insbesondere Behälter) zwischen dem Lagerbereich und dem Roboter am Arbeitsplatz angeordnet ist, und/oder eine zweite Fördertechnik zum Abtransport von Waren in oder auf zweiten Warenträgern (Auftragsladehilfsmittel, insbesondere Karton) zwischen dem Lagerbereich und dem Roboter am Arbeitsplatz vorgesehen ist, wobei der Roboter dazu ausgebildet ist, zumindest eine Ware von oder aus dem ersten Warenträger (Lagerladehilfsmittel, insbesondere Behälter) zu einem Auftrag aufzunehmen und die zumindest eine Ware in oder auf den zweiten Warenträger (Auftragsladehilfsmittel, insbesondere Kartons) zu diesem Auftrag abzulegen oder abzuwerfen. Auf diese Weise kann ein Kommissioniervorgang besonders effizient und schnell ausgeführt werden.

An dieser Stelle wird angemerkt, dass sich die zum Verfahren offenbarten Ausführungsvarianten und daraus resultierenden Vorteile gleichermaßen auf die offenbarte Vorrichtung beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Beispiel für ein Robotersystem mit einem Roboter und einem fix installierten Kamerasystem in Schrägansicht;
- Fig. 2: ähnlich wie Figur 1, jedoch mit einem beweglichen Kamerasystem mit einer Kamera, die an einem Roboterarm-Segment des Roboters befestigt ist;
- Fig. 3: ein Beispiel für ein Lager- und Kommissioniersystem in Draufsicht;
- Fig. 4: ein Beispiel, bei dem die Greifeinheit stark gegenüber einer Greiffläche der Ware geneigt wird;
- Fig. 5: ein Beispiel, bei dem eine Ware beim Aufnehmen gegen die Seitenwand eines Ladehilfsmittels gedrückt wird;
- Fig. 6: ein Beispiel für das Werfen einer Ware in einen zweiten Warenträger entlang einer Wurfparabel.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

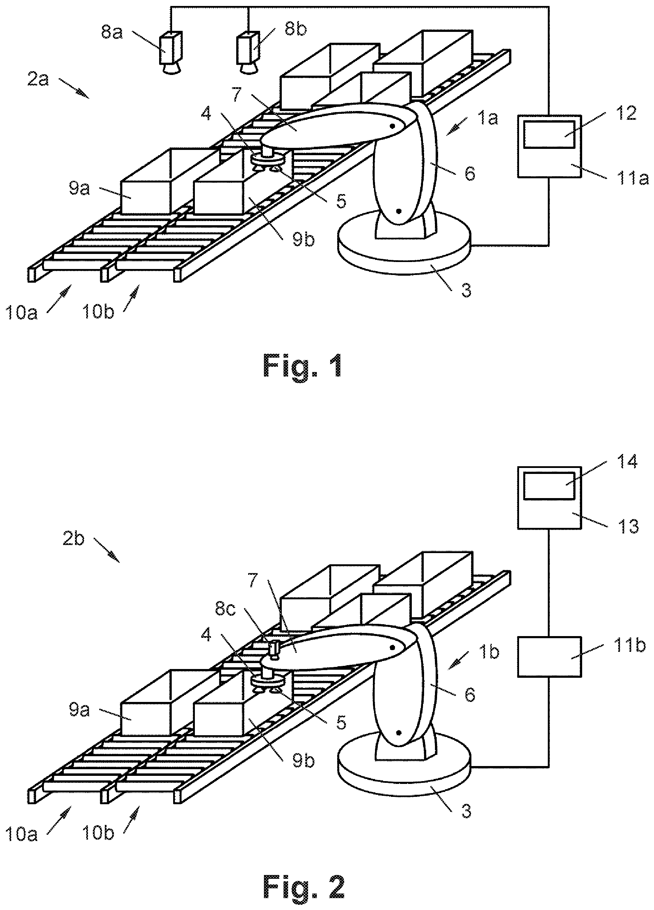

Die Figur 1 zeigt einen Roboter 1a in einem Robotersystem 2a. Der Roboter 1a weist eine gegenüber einer Roboterbasis 3 bewegbare Greifeinheit 4 auf, welche in diesem Beispiel drei voneinander beabstandete Sauggreifer 5 aufweist. Die Greifeinheit 4 ist über einen Roboterarm, welcher zwei Armsegmente 6 und 7 aufweist, mit der Roboterbasis 3 gelenkig verbunden. Weiterhin zeigt die Figur 1 ein Sensorsystem 8a, 8b, welches der Erfassung der Warenträger 9a und 9b sowie der darin lagernden Waren dient und in diesem Beispiel zwei Kameras 8a, 8b umfasst. Die Waren sind in der Figur 1 jedoch nicht sichtbar, da sie in den Warenträgern 9a und 9b lagern, die in diesem Beispiel als Behälter ausgeführt sind. Der Behälter 9a ist ein Quellbehälter, aus welchem Waren von der Greifeinheit 4 aufgenommen / entnommen werden, und der Behälter 9b ist ein Zielbehälter, in welchen Waren von der Greifeinheit 4 abgelegt / abgeworfen werden.

Die Kameras 8a, 8b sind in diesem Beispiel über den Behältern 9a und 9b angeordnet und jeweils als Stereokamera ausgebildet. Demnach erfassen die Kameras 8a, 8b ein dreidimensionales Abbild vom Inneren zumindest der Behälter 9a und 9b und der darin lagernden Waren. Grundsätzlich könnte auch bloß die Kamera 8a (Stereokamera) oberhalb des Behälters 9a oder bloß die Kamera 8b (Stereokamera) oberhalb des Behälters 9b vorgesehen werden. Denkbar ist weiterhin, dass für die Behälter 9a und 9b lediglich eine gemeinsame Kamera 8a (Stereokamera) vorgesehen ist. Auch wenn in einer bevorzugten Ausführung Stereokameras verwendet werden, könnten die Kameras 8a, 8b auch als Kamera zur Erfassung eines zweidimensionalen Abbilds vom Inneren zumindest der Behälter 9a und 9b und den darin lagernden Waren ausgebildet sein.

Die in der Figur 1 gezeigte Anordnung umfasst weiterhin eine Fördertechnik zum Antransport der Behälter 9a, 9b zum Robotersystem 2a und zum Abtransport der Behälter 9a, 9b vom Robotersystem 2a. Insbesondere umfasst die Fördertechnik eine erste Förderstrecke 10a zum Antransport der Behälter 9a, 9b zum Robotersystem 2a und eine zweite Förderstrecke 10b zum Abtransport der Behälter 9a, 9b vom Robotersystem 2a.

Schließlich umfasst die in der Figur 1 dargestellte Anordnung eine Robotersteuerung 11a, welche mit den Kameras 8a, 8b und dem Roboter 1a verbunden ist und dazu dient, die Bewegung der Greifeinheit 4 entsprechend einem vorgegebenen Umlade- oder Kommissioniervorgang anzusteuern. Die Robotersteuerung 11a weist in diesem Beispiel zudem eine optionale Roboter-Datenbank 12 auf.

Die Figur 2 zeigt ein Robotersystem 2b, das dem in der Figur 1 dargestellten Robotersystem 2a sehr ähnlich ist. Im Unterschied dazu sind jedoch keine Kameras 8a, 8b oberhalb der Behälter 9a und 9b angeordnet, sondern es ist eine einzige Kamera 8c direkt am zweiten Armsegment 7 des Roboters 1b angeordnet. Diese Kamera 8c ist mit einer Robotersteuerung 11b verbunden (Verbindung nicht dargestellt). Weiterhin kann die Kamera 8c wiederum als Stereokamera ausgeführt sein, um ein dreidimensionales Abbild der Behälter 9a und 9b sowie der darin gelagerten Waren zu erfassen, beispielsweise indem die Kamera 8c mithilfe des Roboters 1a über den Behälter 9a oder über den Behälter 9b bewegt und dort ein Bild erfasst wird. Denkbar wäre aber auch, dass die Kamera 8c lediglich zur Erfassung eines zweidimensionalen Abbilds ausgebildet ist, und ein dreidimensionales Abbild der Behälter 9a und 9b sowie der darin gelagerten Waren durch Erfassen mehrerer zweidimensionaler Abbilder während einer Bewegung der Kamera 8c und anschließender Berechnung des dreidimensionalen Abbilds generiert wird.

Ein weiterer Unterschied des Robotersystems 2b zum Robotersystem 2a aus der Figur 1 besteht darin, dass die Robotersteuerung 11b mit einem zentralen Rechner 13 verbunden ist, der eine optionale zentrale Datenbank 14 aufweist.

An dieser Stelle wird angemerkt, dass die in der Figur 2 dargestellte Verbindung zum zentralen Rechner 13 beziehungsweise zur zentralen Datenbank 14 auch bei dem Robotersystem 2a der Figur 1 eingesetzt werden kann. Insbesondere können sowohl die Roboter-Datenbank 12, als auch die zentrale Datenbank 14 vorgesehen sein. Denkbar ist natürlich auch, dass (nur) die Roboter-Datenbank 12 in dem Robotersystem 2b der Figur 2 eingesetzt wird. An dieser Stelle wird auch angemerkt, dass die Kamera 8c auch mit den Kameras 8a..8d aus dem Robotersystem 1a der Fig. 1 kombiniert werden kann.

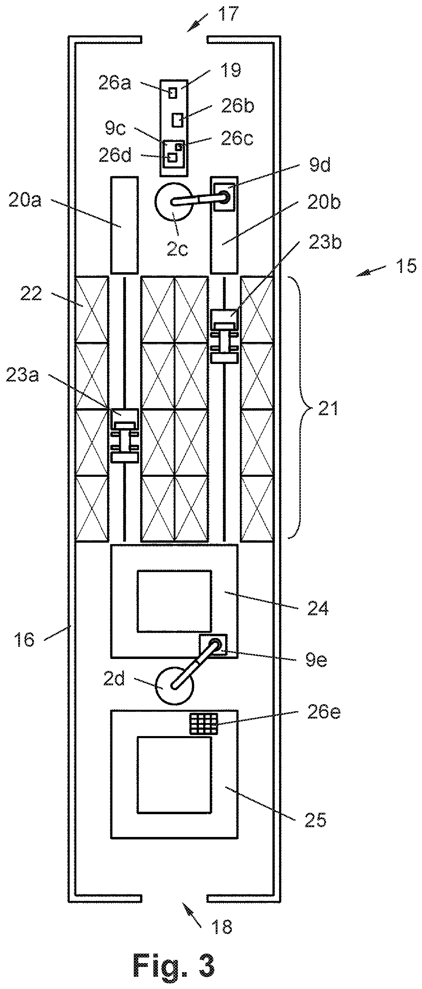

Die Figur 3 zeigt ein Lager- und Kommissioniersystem 15, welches ein Gebäude 16 aufweist, sowie ein Tor an einem Wareneingang 17 und ein Tor an einem Warenausgang 18. Im Bereich des Wareneingangs 17 befinden sich eine erste Förderstrecke 19 und zwei zweite Förderstrecken 20a und 20b. Die erste Förderstrecke 19 verbindet den Wareneingang 17 mit einem Robotersystem 2c. Die zwei zweiten Förderstrecken 20a und 20b verbinden das Robotersystem 2c mit einem Lagerbereich 21, der mehrere Lagerregale 22 sowie Regalbediengeräte 23a und 23b umfasst, die in zwischen den Lagerregalen 22 verlaufenden Regalgassen verfahren. An jenem Ende der Regalgassen, welches den zweiten Förderstrecken 20a und 20b gegenüberliegt, ist eine dritte Förderstrecke 24 angeordnet, die in diesem Beispiel ringförmig ausgebildet ist und zu einem weiteren Robotersystem 2d führt. Im Wirkungsbereich des Robotersystems 2d ist auch eine vierte Förderstrecke 25 angeordnet, welche das Robotersystem 2d fördertechnisch mit dem Warenausgang 18 verbindet.

Die in den Figuren 1 bis 3 dargestellten Ladehilfsmittel 9a..9e sind als Behälter, konkret beispielsweise als Karton, Schachtel oder Box ausgeführt. Der Behälter 9a..9e umfasst generell einen Behälterboden, an diesem aufragende Seitenwände und eine durch die Seitenwände begrenzte Beladeöffnung. Grundsätzlich ist es aber auch vorstellbar, dass die in dem vorgestellten Verfahren verwendeten Ladehilfsmittel 9a..9e als Palette oder Tablar ausgebildet ist. Da ein Tablar üblicherweise (niedrige) Seitenwände aufweist, kann dieses auch als Behälter aufgefasst werden.

Zudem eignet sich das vorgeschlagene Verfahren beziehungsweise das vorgeschlagene Robotersystem 2a..2d, sowie das vorgeschlagene Lager- und Kommissioniersystem 15 nicht nur für die Manipulation von mehr oder minder quaderförmigen Waren 26a..26e, sondern auch für die Manipulation von unregelmäßig geformten Waren 26a..26e.

An dieser Stelle wird auch angemerkt, dass für die Robotersysteme 2c und 2d vorgesehene Robotersteuerungen 11a und 11b im Lager- und Kommissioniersystem 15 ebenfalls vorhanden, jedoch in der Figur 3 nicht explizit dargestellt sind. Ähnliches gilt für die Roboter-Datenbank 12, den zentralen Rechner 13 und die zentrale Datenbank 14, die im Lager- und Kommissioniersystem 15 ebenfalls vorhanden sein können, jedoch in der Figur 3 nicht explizit dargestellt sind.

Die Funktion der in den Figuren dargestellten Anordnungen wird nun untenstehend im Detail erläutert:
In den Figuren 1 und 2 ist der Ablauf beim Umladen von Waren 26a..26e mithilfe der Greifeinheit 4 aus einem ersten Warenträger 9a (Quellbehälter) in einen zweiten Warenträger 9b (Zielbehälter) dargestellt. Die als kistenförmiger Behälter ausgebildeten Warenträger 9a und 9b werden für den Umladevorgang mit der Fördertechnik 10a und 10b zum Roboter 1a, 1b hin transportiert und nach dem Umladevorgang vom Roboter 1a, 1b weg transportiert. Der Transport der Waren 26a..26e mithilfe von Ladehilfsmitteln 9a und 9b ist aber keine notwendige Bedingung, sondern die Waren 26a..26e können auch direkt auf der Fördertechnik transportiert werden, wenn diese beispielweise einen Bandförderer, einen Gliederbandförderer und dgl. als erste Förderstrecke 10a und einen Bandförderer, einen Gliederbandförderer und dgl. als zweite Förderstrecke 10b umfasst. Selbstverständlich könnten auch Rollenförderer 10a und 10b vorgesehen sein. Gleichermaßen könnten anstelle der Behälter 9a und 9b auch andere Ladehilfsmittel vorgesehen sein, beispielsweise Tablare oder Kartons, Werden im Bereich des Robotersystems 2a..2d Ladehilfsmittel (Behälter, Tablare, Kartons) als erste Objektträger 10a verwendet, von welchen oder aus welchen Waren 26a..26e mit den Sauggreifern 5 entnommen werden, so können die (Quell)Ladehilfsmittel vorteilhaft sortenrein mit Waren 26a..26e oder fachunterteilt sortenrein mit Waren 26a..26e beladen sein. Beispielsweise enthält ein erstes Ladehilfsmittel die Ware "A", ein zweites Ladehilfsmittel die Ware "B" usw. Andererseits ist es auch möglich, dass ein Ladehilfsmittel durch Trennwände in mehrere Aufnahmefächer unterteilt ist und unterschiedliche Waren "A", "B" aufnehmen kann, wobei im ersten Aufnahmefach eine Ware "A" und im zweiten Aufnahmefach eine Ware "B" aufgenommen werden kann.

Generell werden die Waren 26a..26e hinsichtlich eines der physikalischen Parameter: Formstabilität, Druckstabilität, Biegesteifigkeit, Zugfestigkeit, absolutes Gewicht oder spezifisches Gewicht zumindest in Waren 26a..26e einer ersten Type und Waren 26a..26e einer zweiten Type unterschieden. So können die Waren 26a..26e beispielsweise in leicht verformbare und schwer verformbare Waren 26a..26e, weiche/nachgiebige und harte/starre Waren 26a..26e, biegeschlaffe und biegestarre Waren 26a..26e, unzerbrechliche und zerbrechliche Waren 26a..26e, leichte und schwere Waren 26a..26e sowie spezifisch leichte und spezifisch schwere Waren 26a..26e unterschieden werden.

Vor dem Aufnehmen einer Ware 26a..26e wird deren Type ermittelt. In Folge wird die besagte Ware 26a..26e mit der Greifeinheit 4 von oder aus dem ersten Warenträger 9a aufgenommen und in oder auf den zweiten Warenträger 9b abgelegt oder abgeworfen. Dabei wird der Roboter 1a, 1b und/oder die Greifeinheit 4, insbesondere eine Bewegung des Roboters 1a, 1b und/oder der Greifeinheit 4, mithilfe der Robotersteuerung 11a, 11b abhängig von der für die genannte Ware 26a..26e ermittelten Type gesteuert.

Für die Unterscheidung der Waren 26a..26e in die zumindest eine erste und zweite Type wird ein Schwellwert herangezogen, welcher einem physikalischen Parameter zugeordnet ist, beispielsweise dem Gewicht der Ware 26a..26e. Der Schwellwert wird in diesem Fall auf 1 kg festgesetzt.

In einer Variante des vorgeschlagenen Verfahrens enthält ein Programm für die Steuerung des Roboters 1a, 1b und/oder der Greifeinheit 4, das in der Robotersteuerung 11a, 11b ausgeführt wird, mehrere Programmzweige, die in Abhängigkeit einer physikalischen Eigenschaft respektive eines physikalischen Parameters oder einer Type der Waren 26a..26e durchlaufen werden. Beispielsweise kann der Programmablauf mit einer WENN-DANN-Bedingung (IF-ELSE-Bedingung) gesteuert werden, so wie dies beispielsweise unten angegeben ist

```
 WENN Ware = schwer DANN
 ...
 ENDE
```

```
 WENN Warengewicht > 1 kg DANN
 ...
 ENDE
```

Alternativ oder zusätzlich können die Bewegungen des Roboters 1a, 1b auch mit Bewegungsparametern beeinflusst werden. Als Bewegungsparameter können zum Beispiel eine Geschwindigkeit und/oder Beschleunigung der Greifeinheit 4 vorgesehen sein. Die Auswahl eines solchen Bewegungsparameters kann wiederum mit einer WENN-DANN-Bedingung erfolgen, so wie das untenstehend am Beispiel der Geschwindigkeitseinstellung für die Greifeinheit 4 dargestellt ist:

```
 WENN Ware = schwer DANN
      Geschwindigkeit = 1 m/s
      ENDE
```

```
 WENN Warengewicht > 1 kg DANN
      Geschwindigkeit = 1 m/s
      ENDE
```

Denkbar ist aber auch, dass ein Bewegungsparameter für den Roboter 1a, 1b in Form eines Datensatzes gespeichert ist, wobei der Bewegungsparameter einer Identifikation der Ware 26a..26e, einer physikalischen Eigenschaft respektive einem physikalischen Parameter der Ware 26a..26e oder einer Type der Ware 26a..26e zugeordnet ist, so wie das unten beispielhaft dargestellt ist:

| Identifikationsnummer | Geschwindigkeit |
|---|---|
| 15689090 | 1 m/s |

| Warengewicht | Geschwindigkeit |
|---|---|
| 1 kg | 1 m/s |

| Warentype | Geschwindigkeit |
|---|---|
| schwer | 1 m/s |

Die betreffenden Datensätze können in der Roboter-Datenbank 12 und/oder in der zentralen Datenbank 14 gespeichert sein.

Die Type einer Ware 26a..26e kann zum Beispiel anhand einer für diese Ware 26a..26e ermittelten physikalischen Eigenschaft respektive anhand eines für diese Ware 26a..26e ermittelten physikalischen Parameters festgelegt werden. Ein beispielhafter Programmablauf für die Zuordnung einer Ware 26a..26e zu einer bestimmten Type anhand des Warengewichts kann beispielsweise wie untenstehend aussehen:

```
 WENN Ware > 1 kg DANN
      Warentype = schwer
 ENDE
```

Eine physikalische Eigenschaft einer Ware 26a..26e, beispielsweise die Größe einer Ware 26a..26e, kann direkt über das Sensorsystem, also in dem vorliegenden Beispiel mithilfe der Kameras 8a, 8b ermittelt werden. In Folge kann wiederum die Type der Ware 26a..26e festgelegt werden.

Denkbar ist aber auch dass die Eigenschaft einer Ware 26a..26e oder die Type einer Ware 26a..26e über die Identifikation der Ware 26a..26e ermittelt wird. Dabei wird eine Ware 26a..26e mithilfe des Sensorsystems 8a, 8b identifiziert (beispielsweise umfasst dieses für diesen Zweck ein Barcode-Lesegerät oder ein RFID-Lesegerät), und mithilfe eines Datensatzes wird der zugeordnete physikalische Parameter und und/oder die zugeordnete Type ermittelt. Beispielsweise könnte ein Datensatz die untenstehende Struktur aufweisen:

| Identifikationsnummer | Warengewicht |
|---|---|
| 15689090 | 1 kg |

| Identifikationsnummer | Warentype |
|---|---|
| 15689090 | schwer |

Die betreffenden Datensätze können wiederum in der Roboter-Datenbank 12 und/oder in der zentralen Datenbank 14 gespeichert sein.

Denkbar ist aber auch, dass eine physikalische Eigenschaft respektive ein physikalischer Parameter der Ware 26a..26e, eine Type der Ware 26a..26e oder eine Identifikation der Ware 26a..26e mithilfe des zentralen Rechners 13 ermittelt wird, konkret dadurch, dass der zentrale Rechner 13 Kenntnis darüber besitzt, welche Ware 26a..26e sich im Wirkungsbereich des Roboters 1a, 1b befindet. Beispielsweise kann dies über Weggeber in den Förderrollen erfolgen, die in der Fördertechnik 10a, 10b verwendet sind. Über diese Weggeber kann die Position einer Ware 26a..26e auf der Fördertechnik 10a, 10b beziehungsweise im Lager- und Kommissioniersystem 15 bestimmt werden und damit auch deren physikalischen Eigenschaften, deren Type und/oder deren Identifikation.

Denkbar ist weiterhin, dass von der zentralen Steuerung 13 beziehungsweise aus der zentralen Datenbank 14 Programmabschnitte oder Codesegmente (Applets) bezogen werden, die in Folge in die Robotersteuerung 11a, 11b geladen werden. Diese Programmabschnitte oder Codesegmente können sich für verschiedene Wareneigenschaften beziehungsweise Warentypen voneinander unterscheiden. Denkbar wäre auch, dass von der zentralen Steuerung 13 beziehungsweise aus der zentralen Datenbank 14 Zeiger (Pointer) auf Programmabschnitte oder Codesegmente bezogen werden, die sich für verschiedene Wareneigenschaften beziehungsweise Warentypen voneinander unterscheiden.

An dieser Stelle wird angemerkt, dass die oben vorgeschlagenen Maßnahmen zur Ermittlung einer physikalischen Eigenschaft (eines physikalischen Parameters) einer Ware 26a..26e, einer Type einer Ware 26a..26e, einer Identifikation einer Ware 26a..26e und/oder eines Bewegungsparameters eines Roboters 1a, 1b sowie die Maßnahmen zur Steuerung des Programmablaufs für den Roboter 1a, 1b alleine sowie in beliebiger Kombination angewandt werden können.

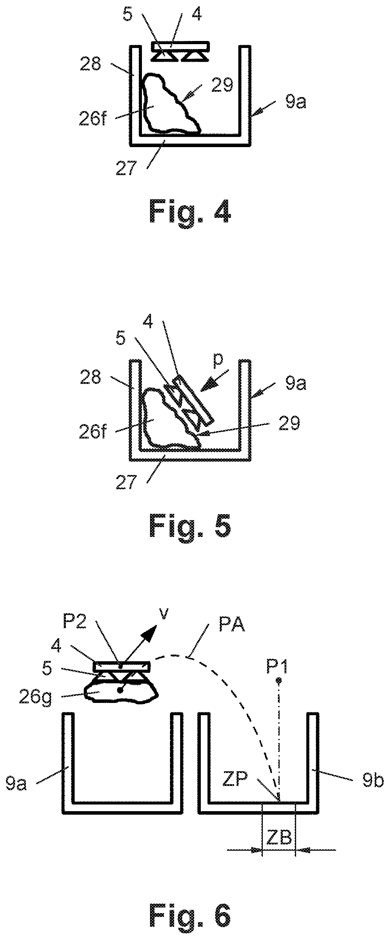

Der Sauggreifer 4 wird beim Aufnehmen einer Ware 26a..26e in Abhängigkeit der Type der Ware 26a..26e vor oder nach dem Kontakt des Sauggreifers 4 mit der Ware 26a..26e aktiviert. Denkbar ist weiterhin, dass eine Kontaktebene des Sauggreifers 4 beim Aufnehmen einer Ware 26a..26e in Abhängigkeit der Type der Ware 26a..26e unterschiedlich stark gegenüber einer Greiffläche der Ware 26a..26e geneigt werden kann (vergleiche auch Figur 4). In einer weiteren Variante wird eine Kollision der Greifeinheit 4 mit einer anderen als der aufzunehmenden Ware 26a..26e in Abhängigkeit der Type der anderen Ware 26a..26e vermieden oder zugelassen. In noch einer anderen Variante wird die maximale Geschwindigkeit der Greifeinheit 4 und/oder die maximale Beschleunigung der Greifeinheit 4 in Abhängigkeit der Type der Ware 26a..26e gewählt. Weiterhin ist es denkbar, dass in Abhängigkeit einer Type der Ware 26a..26e eine Zielposition oder ein Zielbereich für das Ablegen und/oder Abwerfen einer Ware 26a..26e berechnet wird (siehe auch Figur 6). In einer weiteren Variante wird eine Ware 26a..26e in Abhängigkeit der Type der Ware 26a..26e beim Aufnehmen gegen die Seitenwand eines Ladehilfsmittels 9a, 9b gedrückt oder ohne Druck auf die besagte Seitenwand aus dem Ladehilfsmittel 9a, 9b entnommen (siehe auch Figur 5). In einer weiteren Variante werden die Waren 26a..26e abhängig von der Type der Ware 26a..26e auf den zweiten Warenträger 9b abgeworfen oder abgelegt (siehe auch Figur 6).

Denkbar ist auch, dass eine Bahnkurve für die Greifeinheit 4 anhand der Type einer Ware 26a..26e verändert wird. Beispielsweise können für Waren 26a..26e der zweiten Type eher weiche/runde Bewegungen vorgesehen werden (die Bahnkurve weist also vergleichsweise große Radien auf), wohingegen die Bahnkurve der Greifeinheit 4 für Waren 26a..26e der ersten Type auch engere Radien aufweisen kann.

Denkbar ist auch, dass große Waren 26a..26e höher über eine Seitenwand eines Ladehilfsmittels 9a, 9b hinausgehoben werden, insbesondere wenn sie leicht verformbar, weich/nachgiebig und/oder biegeschlaff sind, als kleine Waren 26a..26e, insbesondere wenn diese schwer verformbar, hart/starr und/oder biegestarr sind.

In der Figur 3 ist eine etwas komplexere Anordnung dargestellt, konkret ein Lager- und Kommissioniersystem 15. Dabei werden Waren 26a..26e am Wareneingang 17 angeliefert, auf die erste Förderstrecke 19 geladen, vom Robotersystem 2c von der ersten Förderstrecke 19 auf die zweite Förderstrecken 20a und 20b umgeladen und mithilfe der Regalbediengeräte 23a und 23b in die Lagerregale 22 eingelagert. Die erste Förderstrecke 19 fungiert bei diesem Vorgang als erster Warenträger beziehungsweise Quelle, wohingegen die zweiten Förderstrecken 20a und 20b bei diesem Vorgang als zweite Warenträger beziehungsweise Ziel fungieren.

Ist ein Kommissionierauftrag abzuarbeiten, werden die dem Auftrag zugeordneten Waren 26a..26e mithilfe zumindest eines Regalbediengeräts 23a und 23b aus zumindest einem Lagerregal 22 ausgelagert und auf die dritte Förderstrecke 24 übergeben. In Folge werden die Waren 26a..26e mithilfe der dritten Förderstrecke 24 zum Robotersystem 2d transportiert und von diesem von der dritten Förderstrecke 24 auf die vierte Förderstrecke 25 umgeladen und schließlich mithilfe der vierten Förderstrecke 25 zum Warenausgang 18 transportiert. Die dritte Förderstrecke 24 fungiert bei diesem Vorgang als erster Warenträger beziehungsweise Quelle, wohingegen die vierte Förderstrecke 25 bei diesem Vorgang als zweiter Warenträger beziehungsweise Ziel fungiert.

Wie aus der Figur 3 erkennbar ist, werden die Waren 26a, 26b und 26e direkt auf den als Warenträgern fungierenden Förderstrecken 19, 20a, 20b, 24 und 25 transportiert, wohingegen die Waren 26c und 26d mithilfe von Ladehilfsmitteln 9c..9e transportiert werden, die dementsprechend ebenfalls als Warenträger fungieren. In der Figur 3 liegt also eine gemischte Transportart vor. Denkbar wäre natürlich auch, dass die Waren 26a..26e ausschließlich auf den als Warenträgern fungierenden Förderstrecken 19, 20a, 20b, 24 und 25 transportiert werden oder ausschließlich mithilfe von Ladehilfsmitteln 9c..9e.

Die Ausbildung und Anordnung der Förderstrecken 19, 20a, 20b, 24 und 25 in der Figur 3 ist selbstverständlich nur illustrativ zu sehen, und es sind auch andere Formen und Anordnungen der genannten Förderstrecken 19, 20a, 20b, 24 und 25 denkbar. Insbesondere könnte auch am Wareneingang 17 eine ringförmige Förderstrecke angeordnet sein, oder es könnten lineare Förderstrecken am Warenausgang 18 vorgesehen sein. Die fördertechnische Anbindung des Robotersystems 2c und 2d an den Wareneingang 17, an den Lagerbereich 21 und an den Warenausgang 18 erfolgt auch nicht zwingend über ortsgebundene Fördermittel, so wie das in der Figur 3 dargestellt ist, sondern könnte auch ganz oder teilweise über autonome Transportfahrzeuge (insbesondere autonome Flurförderfahrzeuge) erfolgen, deren Ladeplattformen dann ebenfalls als Warenträger dienen.

Denkbar wäre weiterhin, dass die Waren 26a..26e vom Robotersystem 2c direkt auf die Regalbediengeräte 23a und 23b geladen oder durch das Robotersystem 2d direkt von den Regalbediengeräten 23a und 23b übernommen werden. In diesem Fall dienen die Ladeplattformen der Regalbediengeräte 23a und 23b ebenfalls als Warenträger.

An dieser Stelle wird auch angemerkt, dass die Roboter 1a und 1b nicht notwendigerweise als Gelenkarmroboter ausgeführt sein müssen, sondern beispielsweise auch als Portalroboter ausgebildet sein können.

Es sei auch noch erwähnt, dass die Waren 26a..26e im oder am ersten Warenträger 9a, 9c, 9e, 10a, 19, 24 nebeneinander, übereinander, stehend oder liegend angeordnet sein können, daher ungeordnet (chaotisch) bzw. in Wirrlage.

Weiterhin wird angemerkt, dass das Sensorsystem nicht nur Kameras 8a..8c aufweisen kann, sondern alternativ oder zusätzlich auch ein Barcode-Lesegerät, ein RFID-Lesegerät, eine Waage, einen Raumtiefensensor, einen Laserscanner und/oder einen Ultraschallsensor umfassen kann. Mithilfe dieser Sensoren kann insbesondere ein dreidimensionales Abbild der in oder auf einem Warenträger (zum Beispiel in den Behältern 9a..9e oder auf den Förderstrecken 10a und 10b) liegenden Waren 26a..26e erfasst werden.

Generell kann durch eine dreidimensionale Erfassung eine Oberflächenstruktur der Waren 26a..26e ermittelt und die Eignung für das Greifen durch die Sauggreifer 5 festgestellt werden. Beispielsweise eignen sich stark konvexe Oberflächen weniger zum Greifen, wohingegen ebene Flächen besonders gut greifbar sind.

Die Figur 4 zeigt nun ein Beispiel dafür, dass eine Kontaktebene des Sauggreifers 5 beim Aufnehmen einer Ware 26f der ersten Type stark gegenüber einer Greiffläche 29 der Ware 26f geneigt werden kann. Konkret zeigt die Figur 4 ein Ladehilfsmittel 9a, das einen Boden 27 und von diesem Boden 27 aufragende Seitenwände 28 aufweist. Im Laderaum des Ladehilfsmittels 9a befindet sich eine Ware 26f mit einer schräg ausgerichteten Greiffläche 29. Der Winkel zur Horizontalen beträgt in etwa 60°. Trotz der stark geneigten Greiffläche 29 der Ware 26f bleibt die Kontaktebene des Sauggreifers 5 beim Aufnehmen der Ware 26f horizontal ausgerichtet. Dadurch, dass Waren 26f der ersten Type nachgiebig sind, wird die Greiffläche 29 beim Absenken der Greifeinheit 4 an die Kontaktebene der Sauggreifer 5 angepasst und richtet sich schließlich im Wesentlichen horizontal aus. Weil die Kontaktebene des Sauggreifers 5 beim Aufnehmen der Waren 26f nicht parallel zu deren Greiffläche 29 ausgerichtet wird, kann der Umladevorgang oder Kommissioniervorgang rasch erfolgen.

Die Figur 5 zeigt ein Beispiel dafür, dass eine Ware 26f der ersten Type beim Aufnehmen gegen die Seitenwand eines Ladehilfsmittels 9a gedrückt werden kann. Konkret zeigt die Figur 5 wiederum ein Ladehilfsmittel 9a, das einen Boden 27 und von diesem Boden 27 aufragende Seitenwände 28 aufweist. Im Laderaum des Ladehilfsmittels 9a befindet sich wiederum eine Ware 26f, die benachbart zu Seitenwand 28 positioniert ist und eine schräg ausgerichtete Greiffläche 29 aufweist. Der Winkel zur Horizontalen beträgt wieder in etwa 60°. Die Kontaktebene des Sauggreifers 5 wird beim Aufnehmen der Ware 26f in diesem Beispiel jedoch im Wesentlichen parallel zur Greiffläche 29 ausgerichtet und schließt somit ebenfalls einen Winkel von in etwa 60° zur Horizontalen ein. Um das Aufnehmen der Ware 26f zu erleichtern, kann die Ware 26f zumindest beim Aufnehmen mit dem Druck p gegen die Seitenwand 28 gedrückt werden. Denkbar wäre weiterhin, dass die Ware 26f auch während des Hochhebens gegen die Seitenwand 28 gedrückt wird und somit an dieser entlang schleift bis die Ware 26f vollständig aus dem Behälter 9a gehoben ist.

Die Figuren 4 und 5 zeigen das Aufnehmen einer Ware 26f einer ersten Type. Waren 26f der zweiten Type werden dagegen auf andere Weise von der Greifeinheit 4 aufgenommen. Insbesondere wird eine Kontaktebene des Sauggreifers 5 beim Aufnehmen einer Ware 26f der zweiten Type weniger stark gegenüber der Greiffläche der Ware 26f geneigt als beim Aufnehmen einer Ware 26f der ersten Type. Konkret beträgt der Winkel zwischen der besagten Kontaktebene und der besagten Greiffläche bei Waren der zweiten Type weniger als 20°, wohingegen der betreffende Winkel für Waren der ersten Type bis zu 70° betragen kann. Weiterhin wird eine Ware 26f der zweiten Type beim Aufnehmen in der Regel ohne Druck auf die Seitenwand 28 des Ladehilfsmittels 9a aus dem Ladehilfsmittel 9a entnommen.

Die Figur 6 zeigt nun ein Beispiel für das Abwerfen einer Ware 26g in den zweiten Warenträger 9b. Konkret zeigt die Figur 6 ein erstes Ladehilfsmittel 9a sowie ein zweites Ladehilfsmittel 9b in einem Zustand, in dem die Ware 26g aus dem ersten Ladehilfsmittel 9a entnommen wurde und nun durch die Greifeinheit 4 gehalten wird.

Für das Abwerfen der Ware 26g wäre es denkbar, dass die Greifeinheit 4 an die Position P1 vertikal über die Zielposition ZP bewegt wird und die Ware 26g in Folge von der Greifeinheit 4 losgelassen wird und in das zweite Ladehilfsmittel 9b fällt. Da das Herunterfallen der Ware 26g durch Umstände begleitet beziehungsweise beeinflusst ist, die nicht im Einflussbereich des Roboters 1a, 1b liegen, wird anstelle einer konkreten Zielposition ZP ein Zielbereich ZB für die Ware 26g vorgesehen.

Denkbar ist aber auch, dass die Ware 26g mithilfe des Roboters 1a, 1b an eine Loslass-Position P2 bewegt wird, welche vertikal über und seitlich neben einer für die Ware berechnete Zielposition ZP respektive vertikal über und seitlich neben einen für die Ware 26g berechneten Zielbereich ZB liegt. Weiterhin liegt die Loslass-Position P2 am Startpunkt einer an die besagte Zielposition ZP / in den besagten Zielbereich ZB führenden Wurfparabel PA, für deren Berechnung zumindest die Bewegungsgeschwindigkeit v der Greifeinheit 4 (in Betrag und Richtung) an der Loslass-Position P2 herangezogen wird. Dementsprechend legt die Ware 26g den entlang der Wurfparabel PA führenden Weg alleine und ohne von der Greifeinheit 4 gehalten zu werden zurück. Da auch diese Bewegung der Ware 26g durch Umstände begleitet beziehungsweise beeinflusst ist, die nicht im Einflussbereich des Roboters 1a, 1b liegen, wird anstelle einer konkreten Zielposition ZP wiederum ein Zielbereich ZB für die Ware 26g vorgesehen.

Insbesondere ist die Bewegungsrichtung der Greifeinheit 4 beziehungsweise die Richtung der Bewegungsgeschwindigkeit v an der Loslass-Position P2 schräg nach oben gerichtet, so wie das in der Figur 6 dargestellt ist. Auf diese Weise kann die Ware 26g relativ weit geworfen werden. Denkbar wäre aber auch dass die Bewegungsgeschwindigkeit v eine andere Richtung aufweist und zum Beispiel in horizontale Richtung weist. Durch die vorgeschlagenen Maßnahmen kann der Weg, den die Greifeinheit 4 für das Abwerfen einer Ware 26g zurücklegen muss, stark reduziert werden.

Die in der Figur 6 präsentierte Vorgangsweise eignet sich für Waren 26g der ersten Type. Waren 26g der zweiten Type werden dagegen vorzugsweise im Ladehilfsmittel 9b abgelegt, das heißt mithilfe der Greifeinheit 4 soweit abgesenkt, dass die Ware 26g vom Boden des Ladehilfsmittels 9b oder anderen bereits im Ladehilfsmittel 9b liegenden Waren 26a..26f unterstützt ist bevor die Sauggreifer 5 deaktiviert werden. Denkbar ist auch, dass selbst Waren 26g der zweiten Type (aus geringer Höhe) in das Ladehilfsmittel 9b fallen gelassen werden. Insbesondere beträgt eine Fallhöhe für die Waren 26g der zweiten Type weniger als 10 cm, wohingegen die Fallhöhe für die Waren 26g der ersten Type mehr als 10 cm beträgt. Insbesondere werden Waren 26g mit geometrischen Formen, welche sich gut für das Stapeln eignen, so im zweiten Warenträger 9b abgelegt, dass sich eine hohe Packungsdichte ergibt. Solche Waren 26g weisen insbesondere ebene Begrenzungsflächen auf und sind im speziellen quaderförmig.

Die Figuren 4 bis 6 wurden auf die Behälter 9a, 9b bezogen. Selbstverständlich kann die offenbarte Lehre aber auch uneingeschränkt auf die Behälter 9c..9e sowie auf die Fördereinrichtungen 10a, 10b, 19, 20a, 20b, 24, 25 angewandt werden.

Besonders vorteilhaft ist es weiterhin, wenn ein unbeabsichtigtes Herunterfallen der aufgenommenen Ware 26a..26g von der Greifeinheit 4 sowie das unbeabsichtigte Ablegen/Abwerfen einer Ware 26a..26g außerhalb eines 26a..26g Toleranzbereiches rund um die berechnete Zielposition ZP für die besagte Ware 26a..26g als Fehler gewertet wird und die Geschwindigkeit und/oder Beschleunigung der Greifeinheit 4 reduziert wird, wenn die Anzahl der Fehler pro Zeiteinheit einen ersten vorgebbaren Schwellwert überschreitet und/oder erhöht wird, wenn die Anzahl der Fehler pro Zeiteinheit einen zweiten vorgebbaren Schwellwert unterschreitet. Auf diese Weise kann das Verfahren zum Umladen/Kommissionieren von Waren 26a..26g adaptiv an sich verändernde Gegebenheiten angepasst werden. Dazu müssen nicht umständlich Eigenschaften von Waren 26a..26g und deren Eignung für das Aufnehmen durch die Greifeinheit 4 ermittelt werden, sondern man macht sich den Umstand zu Nutze, dass sich diese Eignung an der zeitlichen Rate der auftretenden Fehler ablesen lässt. Somit wird stets ein Optimum für die Umlade-Geschwindigkeit beziehungsweise Kommissionier-Geschwindigkeit bei vorgegebener Fehlerrate erzielt.

An dieser Stelle wird festgehalten, dass Waren 26a..26fg der ersten Type und Waren 26a..26g der zweiten Type im Rahmen der oben vorgestellten Abläufe insbesondere mit derselben Greifeinheit 4 aufgenommen und abgelegt/abgeworfen werden. Dadurch kann Zeit für einen Wechsel der Greifeinheit 4 eingespart werden und das Umladen/Kommissionieren von Waren 26a..26g zügig erfolgen.

Abschließend wird auch festgehalten, dass der Schutzbereich durch die Patentansprüche bestimmt ist. Die Beschreibung und die Zeichnungen sind jedoch zur Auslegung der Patentansprüche heranzuziehen.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1a, 1b: Roboter
- 2a..2d: Robotersystem
- 3: Roboterbasis
- 4: Greifeinheit
- 5: Sauggreifer

- 6: erstes Roboterarm Segment
- 7: zweites Roboterarm Segment
- 8a..8c: Kamera (Sensorsystem)
- 9a..9e: Behälter (Warenträger)
- 10a, 10b: Fördertechnik (Warenträger)

- 11a, 11b: Robotersteuerung
- 12: Roboter-Datenbank
- 13: zentraler Rechner
- 14: zentrale Datenbank
- 15: Lager- und Kommissioniersystem

- 16: Gebäudewand
- 17: Wareneingang
- 18: Warenausgang
- 19: erste Förderstrecke (Warenträger)
- 20a, 20b: zweite Förderstrecke (Warenträger)

- 21: Lagerbereich
- 22: Lagerregal
- 23a, 23b: Regalbediengerät
- 24: dritte Förderstrecke (Warenträger)
- 25: vierte Förderstrecke (Warenträger)

- 26a..26g: Ware
- 27: Boden
- 28: Seitenwand
- 29: Greiffläche

- p: von der Greifeinheit ausgeübter Druck
- P1, P2: Loslass-Position
- PA: Wurfparabel
- v: Geschwindigkeit der Greifeinheit an der Loslass-Position
- ZB: Zielbereich
- ZP: Zielposition

## Patentansprüche

1. Verfahren zur Steuerung eines Roboters (1a, 1b) in einem Lager- und Kommissioniersystem (16), welcher eine gegenüber einer Roboterbasis (3) bewegbare Greifeinheit (4) mit zumindest einem Sauggreifer (5) aufweist, bei dem die Waren (26a..26g) mit der Greifeinheit (4) von oder aus einem ersten Warenträger (9a, 9c, 9e, 10a, 19, 24) aufgenommen und in oder auf einen zweiten Warenträger (9b, 9d, 10b, 20a, 20b, 25) abgelegt oder abgeworfen werden,
wobei Waren (26a..26g) hinsichtlich eines der physikalischen Parameter: Formstabilität, Druckstabilität, Biegesteifigkeit, Zugfestigkeit, absolutes Gewicht oder spezifisches Gewicht zumindest in Waren (26a..26g) einer ersten Type und Waren (26a..26g) einer zweiten Type unterschieden werden,
wobei vor dem Aufnehmen einer Ware (26a..26g) die Type der Ware (26a..26g) ermittelt wird, und
wobei die besagte Ware (26a..26g) mit der Greifeinheit (4) von oder aus dem ersten Warenträger (9a, 9c, 9e, 10a, 19, 24) aufgenommen und in oder auf den zweiten Warenträger (9b, 9d, 10b, 20a, 20b, 25) abgelegt oder abgeworfen wird, wobei der Roboter und/oder die Greifeinheit (4) abhängig von der für die genannte Ware (26a..26g) ermittelten Type gesteuert wird,
**dadurch gekennzeichnet, dass**
der zumindest eine Sauggreifer (5) beim Aufnehmen einer Ware (26a..26g) der ersten Type vor dem Kontakt des zumindest einen Sauggreifers (5) mit der besagten Ware (26a..26g) aktiviert wird, wohingegen der zumindest eine Sauggreifer (5) beim Aufnehmen einer Ware (26a..26g) der zweiten Type nach dem Kontakt des zumindest einen Sauggreifers (5) mit der besagten Ware (26a..26g) aktiviert wird,
wobei, falls der physikalische Parameter die Formstabilität ist, Waren der ersten Type einen Elastizitätsmodul von weniger als 1,0 GPa aufweisen und Waren der zweiten Type einen Elastizitätsmodul von mehr als oder gleich 1,0 GPa aufweisen,
oder
wobei, falls der physikalische Parameter die Druckstabilität ist, Waren der ersten Type einen Druck-Elastizitätsmodul von weniger als 1,0 GPa aufweisen oder bei mittiger Belastung eine Druckfederkonstante von weniger als 0,5 N/cm aufweisen und Waren der zweiten Type einen Druck-Elastizitätsmodul von mehr als oder gleich 1,0 GPa aufweisen oder bei mittiger Belastung eine Druckfederkonstante von mehr als oder gleich 0,5 N/cm aufweisen, oder
wobei, falls der physikalische Parameter die Biegesteifigkeit ist, Waren der ersten Type einen Elastizitätsmodul von weniger als 1,0 GPa aufweisen oder eine Biegefederkonstante von weniger als 0,01 Nm/° aufweisen und Waren der zweiten Type einen Elastizitätsmodul von mehr als oder gleich 1,0 GPa aufweisen oder eine Biegefederkonstante von mehr als oder gleich 0,01 Nm/° aufweisen,
oder
wobei, falls der physikalische Parameter die Zugfestigkeit ist, Waren der ersten Type eine Zugfestigkeit von weniger als 100 N/mm² aufweisen und Waren der zweiten Type eine Zugfestigkeit von mehr als oder gleich 100 N/mm² aufweisen,
oder
wobei, falls der physikalische Parameter das absolute Gewicht ist, Waren der ersten Type ein Gewicht von weniger als 1 kg aufweisen und Waren der zweiten Type ein Gewicht von mehr als oder gleich 1 kg aufweisen,
oder
wobei, falls der physikalische Parameter das spezifische Gewicht ist, Waren der ersten Type ein spezifisches Gewicht von weniger als 1 g/cm³ aufweisen und Waren der zweiten Type ein spezifisches Gewicht von mehr als oder gleich 1 g/cm³ aufweisen.

2. Verfahren nach Anspruch 1, **dadurch gekennzeichnet, dass** ein Programm für die Steuerung des Roboters (1a, 1b) und/oder der Greifeinheit (4) zumindest zwei Programmzweige enthält, wobei anhand der Type der aufzunehmenden Ware (26a..26g) ein für die besagte Type bestimmter Programmzweig durchlaufen wird.

3. Verfahren nach Anspruch 1 oder 2, **dadurch gekennzeichnet, dass**
in einer Datenbank (12, 14) Bewegungsparameter für den Roboter (1a, 1b) gespeichert werden, welche den physikalischen Parametern und/oder den Typen der Waren (26a..26g) zugeordnet sind,
ein Bewegungsparameter für den Roboter (1a, 1b) anhand der Type der aufzunehmenden Ware (26a..26g) aus der Datenbank (12, 14) ausgelesen wird, und
die Bewegung des Roboters (1a, 1b) anhand des ausgelesenen Bewegungsparameters gesteuert wird.

4. Verfahren nach einem der Ansprüche 1 bis 3, **dadurch gekennzeichnet, dass** Waren (26a..26g) der ersten Type in oder auf den zweiten Warenträger (9b, 9d, 10b, 20a, 20b, 25) abgeworfen werden, wohingegen Waren (26a..26g) der zweiten Type in oder auf den zweiten Warenträger (9b, 9d, 10b, 20a, 20b, 25) abgelegt werden.

5. Verfahren nach einem der Ansprüche 1 bis 4, **dadurch gekennzeichnet, dass** eine Kontaktebene des zumindest einen Sauggreifers (5) beim Aufnehmen einer Ware (26a..26g) der ersten Type um bis zu 70° gegenüber einer Greiffläche (29) der Ware (26a..26g) geneigt wird, wohingegen die besagte Kontaktebene beim Aufnehmen einer Ware (26a..26g) der zweiten Type um maximal 20° gegenüber einer Greiffläche (29) der Ware (26a..26g) geneigt wird.

6. Verfahren nach einem der Ansprüche 1 bis 5, **dadurch gekennzeichnet, dass** eine Kollision der Greifeinheit (4) mit einer anderen als der aufzunehmenden Ware (26a..26g) vermieden wird, wenn es sich bei der anderen Ware (26a..26g) um eine Ware (26a..26g) der zweiten Type handelt, und zugelassen wird, wenn es sich bei der anderen Ware (26a..26g) um eine Ware (26a..26g) der ersten Type handelt.

7. Verfahren nach einem der Ansprüche 1 bis 6, **dadurch gekennzeichnet, dass** die maximale Geschwindigkeit der Greifeinheit (4) bei Waren (26a..26g) der ersten Type höher ist als bei Waren (26a..26g) der zweiten Type und/oder die maximale Beschleunigung der Greifeinheit (4) bei Waren (26a..26g) der ersten Type höher ist als bei Waren (26a..26g) der zweiten Type.

8. Verfahren nach einem der Ansprüche 1 bis 7, **dadurch gekennzeichnet, dass** für Waren (26a..26g) der zweiten Type eine bestimmte Zielposition (ZP) in oder auf dem zweiten Warenträger (9b, 9d, 10b, 20a, 20b, 25) berechnet wird, wohingegen für Waren (26a..26g) der ersten Type ein Zielbereich (ZB) mit mehreren möglichen Zielpositionen (ZP) in oder auf dem zweiten Warenträger (9b, 9d, 10b, 20a, 20b, 25) berechnet wird.

9. Verfahren nach Anspruch 4, **dadurch gekennzeichnet, dass** eine Ware (26a..26g) der ersten Type mithilfe des Roboters (1a, 1b) vertikal über eine für die Ware (26a..26g) berechnete Zielposition (ZP) oder vertikal über einen für die Ware (26a..26g) berechneten Zielbereich (ZB) bewegt und sodann losgelassen wird.

10. Verfahren nach einem der Ansprüche 1 bis 9, **dadurch gekennzeichnet, dass** ein unbeabsichtigtes Herunterfallen der aufgenommenen Ware (26a..26g) von der Greifeinheit (4) sowie das unbeabsichtigte Ablegen/Abwerfen einer Ware (26a..26g) außerhalb eines Toleranzbereiches rund um eine berechnete Zielposition (ZP) für die besagte Ware (26a..26g) als Fehler gewertet wird und die Geschwindigkeit und/oder Beschleunigung der Greifeinheit (4) reduziert wird, wenn die Anzahl der Fehler pro Zeiteinheit einen ersten vorgebbaren Schwellwert überschreitet, und/oder erhöht wird, wenn die Anzahl der Fehler pro Zeiteinheit einen zweiten vorgebbaren Schwellwert unterschreitet.

11. Verfahren nach einem der Ansprüche 1 bis 10, **dadurch gekennzeichnet, dass** der erste Warenträger und/oder zweite Warenträger als Ladehilfsmittel (9a..9e) oder Fördereinrichtung (10a, 10b, 19, 20a, 20b, 24, 25) ausgebildet ist, wobei das Ladehilfsmittel (9a..9e) einen Boden (27), an diesem aufragende Seitenwände (28) und eine durch die Seitenwände (28) begrenzte Beladeöffnung umfasst.

12. Verfahren nach Anspruch 11, **dadurch gekennzeichnet, dass** eine benachbart zu einer Seitenwand (28) des Ladehilfsmittels (9a..9e) liegende Ware (26a..26g) der ersten Type beim Aufnehmen gegen die besagte Seitenwand (28) gedrückt wird, wohingegen eine benachbart zu einer Seitenwand (28) des Ladehilfsmittels (9a..9e) liegende Ware (26a..26g) der zweiten Type beim Aufnehmen ohne Druck (p) auf die besagte Seitenwand (28) aus dem Ladehilfsmittel (9a..9e) entnommen wird.

13. Verfahren nach einem der Ansprüche 1 bis 12, **dadurch gekennzeichnet, dass** Waren (26a..26g) der ersten Type und Waren (26a..26g) der zweiten Type mit derselben Greifeinheit (4) aufgenommen und abgelegt/abgeworfen werden.

14. Verfahren nach einem der Ansprüche 1 bis 13, **dadurch gekennzeichnet, dass** die Waren (26a..26g) gemäß einem Auftrag
mit Hilfe des ersten Warenträgers (9a, 9c, 9e, 10a, 19, 24) zum Roboter (1a, 1b) transportiert werden,
mit Hilfe des Roboters (1a, 1b) von oder aus dem ersten Warenträger (9a, 9c, 9e, 10a, 19, 24) in oder auf den zweiten Warenträger (9b, 9d, 10b, 20a, 20b, 25) umgeladen werden, und
mit Hilfe des zweiten Warenträgers (9b, 9d, 10b, 20a, 20b, 25) vom Roboter (1a, 1b) weg transportiert werden.

15. Robotersystem (2a..2d), umfassend
einen Roboter (1a, 1b) mit einer gegenüber einer Roboterbasis (3) bewegbaren Greifeinheit (4) mit zumindest einem Sauggreifer (5) zum Aufnehmen von Waren (26a..26g), wobei der Roboter (1a, 1b) dazu ausgebildet ist, Waren (26a..26g) mit der Greifeinheit (4) von oder aus einem ersten Warenträger (9a, 9c, 9e, 10a, 19, 24) aufzunehmen und in oder auf einen zweiten Warenträger (9b, 9d, 10b, 20a, 20b, 25) abzulegen oder abzuwerfen, und
eine Robotersteuerung (11a, 11b), welche dazu eingerichtet ist, den Roboter (1a, 1b) anzuweisen, die besagte Ware (26a..26g) von oder aus dem ersten Warenträger (9a, 9c, 9e, 10a, 19, 24) aufzunehmen und in oder auf den zweiten Warenträger (9b, 9d, 10b, 20a, 20b, 25) abzulegen oder abzuwerfen,
wobei die Waren (26a..26g) hinsichtlich eines der physikalischen Parameter:
Formstabilität, Druckstabilität, Biegesteifigkeit, Zugfestigkeit, absolutes Gewicht oder spezifisches Gewicht zumindest in Waren (26a..26g) einer ersten Type und Waren (26a..26g) einer zweiten Type unterschieden werden,
**dadurch gekennzeichnet, dass**
die Robotersteuerung (11a, 11b) weiter dazu ausgebildet ist, den zumindest einen Sauggreifer (5) beim Aufnehmen einer Ware (26a..26g) der ersten Type vor dem Kontakt des zumindest einen Sauggreifers (5) mit der besagten Ware (26a..26g) zu aktivieren und beim Aufnehmen einer Ware (26a..26g) der zweiten Type nach dem Kontakt des zumindest einen Sauggreifers (5) mit der besagten Ware (26a..26g) zu aktivieren,
wobei, falls der physikalische Parameter die Formstabilität ist, Waren der ersten Type einen Elastizitätsmodul von weniger als 1,0 GPa aufweisen und Waren der zweiten Type einen Elastizitätsmodul von mehr als oder gleich 1,0 GPa aufweisen,
oder
wobei, falls der physikalische Parameter die Druckstabilität ist, Waren der ersten Type einen Druck-Elastizitätsmodul von weniger als 1,0 GPa aufweisen oder bei mittiger Belastung eine Druckfederkonstante von weniger als 0,5 N/cm aufweisen und Waren der zweiten Type einen Druck-Elastizitätsmodul von mehr als oder gleich 1,0 GPa aufweisen oder bei mittiger Belastung eine Druckfederkonstante von mehr als oder gleich 0,5 N/cm aufweisen,
oder
wobei, falls der physikalische Parameter die Biegesteifigkeit ist, Waren der ersten Type einen Elastizitätsmodul von weniger als 1,0 GPa aufweisen oder eine Biegefederkonstante von weniger als 0,01 Nm/° aufweisen und Waren der zweiten Type einen Elastizitätsmodul von mehr als oder gleich 1,0 GPa aufweisen oder eine Biegefederkonstante von mehr als oder gleich 0,01 Nm/° aufweisen,
oder
wobei, falls der physikalische Parameter die Zugfestigkeit ist, Waren der ersten Type eine Zugfestigkeit von weniger als 100 N/mm² aufweisen und Waren der zweiten Type eine Zugfestigkeit von mehr als oder gleich 100 N/mm² aufweisen,
oder
wobei, falls der physikalische Parameter das absolute Gewicht ist, Waren der ersten Type ein Gewicht von weniger als 1 kg aufweisen und Waren der zweiten Type ein Gewicht von mehr als oder gleich 1 kg aufweisen,
oder
wobei, falls der physikalische Parameter das spezifische Gewicht ist, Waren der ersten Type ein spezifisches Gewicht von weniger als 1 g/cm³ aufweisen und Waren der zweiten Type ein spezifisches Gewicht von mehr als oder gleich 1 g/cm³ aufweisen.

16. Robotersystem (2a..2d) nach Anspruch 15, **gekennzeichnet durch** eine Roboter-Datenbank (12), in der Bewegungsparameter für den Roboter (1a, 1b) gespeichert sind, welche den physikalischen Parametern und/oder Typen der Waren (26a..26g) zugeordnet sind und welche für die Steuerung der Bewegung des Roboters (1a, 1b) und/oder der Greifeinheit (4) vorgesehen sind.

17. Lager- und Kommissioniersystem (16) zum Kommissionieren von Waren (26a..26g), umfassend einen Lagerbereich (21) zum Lagern von Waren (26a..26g), einen Arbeitsplatz zum Kommissionieren / Umpacken von Waren und ein Robotersystem (2a..2d), **dadurch gekennzeichnet, dass** das Robotersystem (2a..2d) nach Anspruch 15 oder 16 ausgebildet ist.

18. Lager- und Kommissioniersystem (16) nach Anspruch 17, **dadurch gekennzeichnet, dass** der Arbeitsplatz zum vollautomatisierten Kommissionieren von Waren (26a..26g) ausgebildet ist, und eine erste Fördertechnik zum Transport von Waren (26a..26g) in oder auf ersten Warenträgern (9a, 9c, 9e, 10a, 19, 24) zwischen dem Lagerbereich (21) und dem Roboter (1a, 1b) am Arbeitsplatz angeordnet ist, und/oder eine zweite Fördertechnik zum Abtransport von Waren (26a..26g) in oder auf zweiten Warenträgern (9b, 9d, 10b, 20a, 20b, 25) zwischen dem Lagerbereich (21) und dem Roboter (1a, 1b) am Arbeitsplatz vorgesehen ist, wobei der Roboter (1a, 1b) dazu ausgebildet ist, zumindest eine Ware (26a..26g) von oder aus dem ersten Warenträger (9a, 9c, 9e, 10a, 19, 24) zu einem Auftrag aufzunehmen und die zumindest eine Ware (26a..26g) in oder auf den zweiten Warenträger (9b, 9d, 10b, 20a, 20b, 25) zu diesem Auftrag abzulegen oder abzuwerfen.

## Claims

1. A method for controlling a robot (1a, 1b) in a storage and order-picking system (16), the robot (1a, 1b) comprising a gripping unit (4) which is movable in relation to a robot base (3) and has at least one suction gripper (5), in which the articles (26a..26g) are picked up from or out of a first article carrier (9a, 9c, 9e, 10a, 19, 24) and are placed or thrown in or on a second article carrier (9b, 9d, 10b, 20a, 20b, 25) by the gripping unit (4),
wherein articles (26a..26g) are distinguished with respect to one of the following physical parameters: dimensional stability, compressive stability, flexural rigidity, strength, absolute weight or specific weight at least into articles (26a..26g) of a first type and articles (26a..26g) of a second type,
wherein prior to picking up an article (26a..26g), the type of article (26a..26g) is determined, and
wherein the article (26a..26g) is picked up from or out of the first article carrier (9a, 9c, 9e, 10a, 19, 24) and is placed down or thrown in or on the second article carrier (9b, 9d, 10b, 20a, 20b, 25) by the gripping unit (4), wherein the robot and/or the gripping unit (4) is controlled depending on the type determined for the article (26a..26g),
**characterized in that**
the at least one suction gripper (5), when picking up an article (26a..26g) of the first type, is activated prior to the contact of the at least one suction gripper (5) with the article (26a..26g), whereas the at least one suction gripper (5), when picking up an article (26a..26g) of the second type, is activated after the contact of the at least one suction gripper (5) with the article (26a..26g),
wherein, if the physical parameter is dimensional stability, articles of the first type have an elastic modulus of less than 1.0 GPa, and articles of the second type have an elastic modulus of greater than or equal to 1.0 GPa,
or
wherein, if the physical parameter is compressive stability, articles of the first type have an elastic pressure modulus of less than 1.0 GPa or have a compressive spring constant of less than 0.5 N/cm under center loading, and articles of the second type have an elastic pressure modulus of greater than or equal to 1.0 GPa or have a compressive spring constant of greater than or equal to 0.5 N/cm under center loading,
or
wherein, if the physical parameter is flexural rigidity, articles of the first type have an elastic modulus of less than 1.0 GPa or have a bending spring constant of less than 0.01 Nm/°, and articles of the second type have an elastic modulus of greater than or equal to 1.0 GPa or have a bending spring constant of greater than or equal to 0.01 Nm/°,
or
wherein, if the physical parameter is strength, articles of the first type have a strength of less than 100 N/mm², and articles of the second type have a strength of more than or equal to 100 N/mm²,
or
wherein, if the physical parameter is the absolute weight, articles of the first type have a weight of less than 1 kg, and articles of the second type have a weight of more than or equal to 1 kg,
or
wherein, if the physical parameter is the specific weight, articles of the first type have a specific weight of less than 1 g/cm³, and articles of the second type have a specific weight of more than or equal to 1 g/cm³.

2. The method according to claim 1, **characterized in that** a program for controlling the robot (1a, 1b) and/or the gripping unit (4) contains at least two program branches,
wherein, based on the type of the article (26a..26g) to be picked up, a program branch intended for the type is run through.

3. The method according to claim 1 or 2, **characterized in that**
motion parameters for the robot (1a, 1b), which are assigned to the physical properties and/or to the types of articles (26a..26g), are stored in a database (12, 14),
a motion parameter for the robot (1a, 1b) is read from the database (12, 14) using the type of article (26a..26g) to be picked up, and
the motion of the robot (1a, 1b) is controlled using the read motion parameter.

4. The method according to one of claims 1 to 3, **characterized in that** articles (26a..26g) of the first type are thrown in or on the second article carrier (9b, 9d, 10b, 20a, 20b, 25), whereas articles (26a..26g) of the second type are placed in or on the second article carrier (9b, 9d, 10b, 20a, 20b, 25).

5. The method according to one of claims 1 to 4, **characterized in that**, when an article (26a..26g) of the first type is picked up, a contact plane of the at least one suction gripper (5) is tilted by up to 70° in relation to a gripping surface (29) of the article (26a..26g), whereas, when an article (26a..26g) of the second type is picked up, the contact plane is tilted by a maximum of 20° in relation to a gripping surface (29) of the article (26a..26g).

6. The method according to one of claims 1 to 5, **characterized in that** a collision of the gripping unit (4) with another article than the article (26a..26g) to be picked up is prevented if the other article (26a..26g) is an article (26a..26g) of the second type, and a collision of the gripping unit (4) with another article than the article (26a..26g) to be picked up is allowed if the other article (26a..26g) is an article (26a..26g) of the first type.

7. The method according to one of claims 1 to 6, **characterized in that** the maximum speed of the gripping unit (4) is higher for articles (26a..26g) of the first type than for articles (26a..26g) of the second type and/or the maximum acceleration of the gripping unit (4) is higher for articles (26a..26g) of the first type than for articles (26a..26g) of the second type.

8. The method according to one of claims 1 to 7, **characterized in that** a specific target position (ZP) in or on the second article carrier (9b, 9d, 10b, 20a, 20b, 25) is calculated for articles (26a..26g) of the second type, whereas a target region (ZB) with multiple possible target positions (ZP) in or on the second article
carrier (9b, 9d, 10b, 20a, 20b, 25) is calculated for articles (26a..26g) of the first type.

9. The method according to claim 4, **characterized in that** an article (26a..26g) of the first type is moved vertically above a target position (ZP) calculated for the article (26a..26g) or vertically above a target region (ZB) calculated for the article (26a..26g) by the robot (1a, 1b) and is then released.

10. The method according to one of claims 1 to 9, **characterized in that** unintended dropping of the article (26a..26g) picked up by the gripping unit (4) as well as unintended placing/throwing of an article (26a..26g) outside a tolerance region around a calculated target position (ZP) of the article (26a..26g) is assessed as an error, and the speed and/or acceleration of the gripping unit (4) is reduced if the number of errors per time unit exceeds a first settable threshold and/or is increased if the number of errors per time unit comes below a second settable threshold.

11. The method according to one of claims 1 to 10, **characterized in that** the first article carrier and/or the second article carrier configured as a loading aid (9a..9e) or a conveying device (10a, 10b, 19, 20a, 20b, 24, 25), wherein the loading aid (9a..9e) has a bottom (27), side walls (28) rising up from the bottom (27) and a loading opening bounded by the side walls (28).

12. The method according to claim 11, **characterized in that** an article (26a..26g) of the first type lying adjacent to a side wall (28) of the loading aid (9a..9e) is pressed against the side wall (28) when the article is picked up, whereas an article (26a..26g) of the second type lying adjacent to a side wall (28) of the loading aid (9a..9e) is removed from the loading aid (9a..9e) without any pressure (p) on the side wall (28) when the article is picked up.

13. The method according to one of claims 1 to 12, **characterized in that** articles (26a..26g) of the first type and articles (26a..26g) of the second type are picked up and placed/thrown by the same gripping unit (4).

14. The method according to one of claims 1 to 13, **characterized in that**, according to an order, the articles (26a..26g)
are transported to the robot (1a, 1b) using the first article carrier (9a, 9c, 9e, 10a, 19, 24),
are transferred from or out of the first article carrier (9a, 9c, 9e, 10a, 19, 24) in or on the second article carrier (9b, 9d, 10b, 20a, 20b, 25) using the robot (1a, 1b), and
are transported away from the robot (1a, 1b) using the second article carrier (9b, 9d, 10b, 20a, 20b, 25).

15. A robot system (2a..2d), comprising
a robot (1a, 1b) having a gripping unit (4) which is movable in relation to a robot base (3) and has at least one suction gripper (5) for picking up articles (26a..26g), wherein the robot (1a, 1b) is configured for picking up articles (26a..26g) from or out of a first article carrier (9a, 9c, 9e, 10a, 19, 24) and placing or throwing these in or on a second article carrier (9b, 9d, 10b, 20a, 20b, 25) by the gripping unit (4), and
a robot controller (11a, 11b) configured for instructing the robot (1a, 1b) to pick up the articles (26a..26g) from or out of the first article carrier (9a, 9c, 9e, 10a, 19, 24) and to place or throw the article in or on the second article carrier (9b, 9d, 10b, 20a, 20b, 25),
wherein the articles (26a..26g) are distinguished with respect to one of the following physical parameters: dimensional stability, compressive stability, flexural rigidity, strength, absolute weight or specific weight at least into articles (26a..26g) of the first type and articles (26a..26g) of the second type,
**characterized in that**
the robot controller (11a, 11b) is further configured, when an article (26a..26g) of the first type is picked up, to activate the at least one suction gripper (5) prior to the contact of the at least one suction gripper (5) with the article (26a..26g) and, when an article (26a..26g) of the second type is picked up, to activate the at least one suction gripper (5) after the contact of the at least one suction gripper (5) with the article (26a..26g),
wherein, if the physical parameter is dimensional stability, articles of the first type have an elastic modulus of less than 1.0 GPa, and articles of the second type have an elastic modulus of greater than or equal to 1.0 GPa,
or
wherein, if the physical parameter is compressive stability, articles of the first type have an elastic pressure modulus of less than 1.0 GPa or have a compressive spring constant of less than 0.5 N/cm under center loading, and articles of the second type have an elastic pressure modulus of greater than or equal to 1.0 GPa or have a compressive spring constant of greater than or equal to 0.5 N/cm under center loading,
or
wherein, if the physical parameter is flexural rigidity, articles of the first type have an elastic modulus of less than 1.0 GPa or have a bending spring constant of less than 0.01 Nm/°, and articles of the second type have an elastic modulus of greater than or equal to 1.0 GPa or have a bending spring constant of greater than or equal to 0.01 Nm/°,
or
wherein, if the physical parameter is strength, articles of the first type have a strength of less than 100 N/mm², and articles of the second type have a strength of more than or equal to 100 N/mm²,
or
wherein, if the physical parameter is the absolute weight, articles of the first type have a weight of less than 1 kg, and articles of the second type have a weight of more than or equal to 1 kg,
or
wherein, if the physical parameter is the specific weight, articles of the first type have a specific weight of less than 1 g/cm³, and articles of the second type have a specific weight of more than or equal to 1 g/cm³.

16. The robot system (2a..2d) according to claim 15, **characterized by** a robot database (12) in which motion parameters for the robot (1a, 1b) are stored, the motion parameters being assigned to the physical properties and/or to the types of articles (26a..26g) and being provided for controlling the motion of the robot (1a, 1b) and/or the gripping unit (4).

17. A storage and order-picking system (16) for order-picking of articles (26a..26g) comprising a storage area (21) for storing articles (26a..26g), a working area for picking/repacking articles and a robot system (2a..2d), **characterized in that** the robot system (2a..2d) is configured according to claim 15 or 16.

18. The storage and order-picking system (16) according to claim 17, **characterized in that** the working area is configured for fully automated order-picking of articles (26a..26g), and a first conveying system for transporting articles (26a..26g) in or on first article carriers (9a, 9c, 9e, 10a, 19, 24) is arranged between the storage area (21) and the robot (1a, 1b) in the working area, and/or a second conveying system for transporting articles (26a..26g) in or on second article carriers (9b, 9d, 10b, 20a, 20b, 25) is provided between the storage area (21) and the robot (1a, 1b) in the working area, wherein the robot (1a, 1b) is configured for picking up at least one article (26a..26g) from or out of the first article carrier (9a, 9c, 9e, 10a, 19, 24) for an order and to place or throw the at least one article (26a..26g) in or on the second articles carrier (9b, 9d, 10b, 20a, 20b, 25) for the order.

## Revendications

1. Procédé de commande d'un robot (1, 1b) dans un système de stockage et de préparation de commandes (16), qui présente une unité de préhension (4) mobile par rapport à une base de robot (3) et équipée d'au moins une ventouse (5), dans lequel les marchandises (26a, 26g) sont prélevées à l'aide de l'unité de préhension (4) à partir d'un premier support de marchandises (9a, 9c, 9e, 10a, 19, 24) et déposées ou larguées dans ou sur un deuxième support de marchandises (9b, 9d, 10b, 20a, 20b, 25),
les marchandises (26a..26g) se distinguant au moins au regard de l'un des paramètres physiques suivants : stabilité de forme, stabilité à la pression, rigidité en flexion, résistance à la traction, poids absolu ou poids spécifique entre des marchandises d'un premier type (26a..26g) et des marchandises d' (26a..26g) d'un deuxième type,
le type de marchandise (26a..26g) étant déterminé avant le prélèvement d'une marchandise (26a..26g) et
ladite marchandise (26a..26g) étant prélevée à l'aide de l'unité de préhension (4) du ou à partir du premier support de marchandises (9a, 9c, 9e, 10a, 19, 24) et déposée ou larguée dans ou sur le deuxième support de marchandises (9b, 9d, 10b, 20a, 20b, 25), le robot et/ou l'unité de préhension (4) étant commandés en fonction du type déterminé pour ladite marchandise (26a..26g),
**caractérisé en ce**
**qu'**au moins une ventouse (5) est activée lors du prélèvement d'une marchandise (26a..26g) du premier type avant le contact de ladite ventouse (5) avec ladite marchandise (26a..26g), tandis que l'au moins une ventouse (5) est activée lors du prélèvement d'une marchandise (26a.. 26g) du deuxième type, après le contact de l'au moins une ventouse (5) avec ladite marchandise (26a..26g),
dans lequel, si le paramètre physique est la stabilité dimensionnelle, les marchandises du premier type présentent un module d'élasticité inférieur à 1,0 GPa et les marchandises du deuxième type présentent un module d'élasticité supérieur ou égal à 1,0 GPa, ou
dans lequel, si le paramètre physique est la stabilité à la pression, les marchandises du premier type présentent un module d'élasticité en compression inférieur à 1,0 GPa ou une constante de ressort en compression inférieure à 0,5 N/cm sous une charge centrale, et les marchandises du deuxième type présentent un module d'élasticité en compression supérieur ou égal à 1,0 GPa ou une constante de ressort en compression supérieure ou égale à 0,5 N/cm sous une charge centrale, ou
dans lequel, si le paramètre physique est la rigidité en flexion, les marchandises du premier type présentent un module d'élasticité inférieur à 1,0 GPa ou une constante de flexion inférieure à 0,01 Nm/° et les marchandises du deuxième type présentent un module d'élasticité supérieur ou égal à 1,0 GPa ou une constante de flexion supérieure ou égale à 0,01 Nm/°, ou
dans lequel, si le paramètre physique est la résistance à la traction, les marchandises du premier type présentent une résistance à la traction inférieure à 100 N/mm² et les marchandises du deuxième type présentent une résistance à la traction supérieure ou égale à 100 N/mm², ou
dans lequel, si le paramètre physique est le poids absolu, les marchandises du premier type présentent un poids inférieur à 1 kg et les marchandises du deuxième type présentent un poids supérieur ou égal à 1 kg, ou
dans lequel, si le paramètre physique est la densité, les marchandises du premier type présentent une densité inférieure à 1 g/cm³ et les marchandises du deuxième type présentent une densité supérieure ou égale à 1 g/cm³.

2. Procédé selon la revendication 1, **caractérisé en ce qu'**un programme pour la commande du robot (la, 1b) et/ou de l'unité de préhension (4) comprend au moins deux branches de programme, une branche de programme déterminée pour ledit type étant exécutée en fonction du type de marchandise à prélever (26a..26g).

3. Procédé selon la revendication 1 ou 2, **caractérisé en ce que**
des paramètres de mouvement pour le robot (la, lb) sont enregistrés dans une base de données (12, 14), lesquels sont attribués aux paramètres physiques et/ou aux types de marchandises (26a..26g),
un paramètre de mouvement pour le robot (la, lb) est lu à partir de la base de données (12, 14) en fonction du type de marchandise à prélever (26a..26g), et
le mouvement du robot (la, lb) est commandé à l'aide du paramètre de mouvement lu.

4. Procédé selon l'une des revendications 1 à 3, **caractérisé en ce que** les marchandises (26a..26g) du premier type sont larguées dans ou sur le deuxième support de marchandises (9b, 9d, 10b, 20a, 20b, 25), tandis que les marchandises (26a.. 26g) du deuxième type sont déposées dans ou sur le deuxième support de marchandises (9b, 9d, 10b, 20a, 20b, 25).

5. Procédé selon l'une des revendications 1 à 4, **caractérisé en ce qu'**un plan de contact de l'au moins une ventouse (5) est incliné, lors du prélèvement d'une marchandise (26a..26g) du premier type, jusqu'à 70° par rapport à une surface de préhension (29) de la marchandise (26a.. 26g), tandis que ledit plan de contact est incliné d'un maximum de 20° par rapport à une surface de préhension (29) de la marchandise (26a..26g) lors du prélèvement d'une marchandise (26a..26g) du deuxième type.

6. Procédé selon l'une des revendications 1 à 5, **caractérisé en ce qu'**une collision de l'unité de préhension (4) avec une marchandise autre que la marchandise à prélever (26a..26g) est évitée lorsque l'autre marchandise (26a..26g) est une marchandise (26a..26g) du deuxième type, et est autorisée lorsque l'autre marchandise (26a..26g) est une marchandise (26a..26g) du premier type.

7. Procédé selon l'une des revendications 1 à 6, **caractérisé en ce que** la vitesse maximale de l'unité de préhension (4) pour les marchandises (26a..26g) du premier type est supérieure à celle des marchandises (26a..26g) du deuxième type et/ou l'accélération maximale de l'unité de préhension (4) pour les marchandises (26a..26g) du premier type est supérieure à celle des marchandises (26a..26g) du deuxième type.

8. Procédé selon l'une des revendications 1 à 7, **caractérisé en ce que**, pour les marchandises (26a..26g) du deuxième type, une position cible (ZP) déterminée est calculée dans ou sur le deuxième support de marchandises (9b, 9d, 10b, 20a, 20b, 25), tandis que pour les marchandises (26a.. 26g) du premier type, une zone cible (ZB) avec plusieurs positions cibles possibles (ZP) est calculée dans ou sur le deuxième support de marchandises (9b, 9d, 10b, 20a, 20b, 25).

9. Procédé selon la revendication 4,
**caractérisé en ce qu'**une marchandise (26a..26g) du premier type est déplacée verticalement à l'aide du robot (la, 1b) au-dessus d'une position cible (ZP) calculée pour la marchandise (26a..26g) ou verticalement au-dessus d'une zone cible (ZB) calculée pour la marchandise (26a..26g), puis est relâchée.

10. Procédé selon l'une des revendications 1 à 9, **caractérisé en ce qu'**une chute involontaire de la marchandise prélevée (26a..26g) de l'unité de préhension (4) ainsi que le dépôt/la chute involontaire d'une marchandise (26a.,26g) en dehors d'une plage de tolérance autour d'une position cible calculée (ZP) pour ladite marchandise (26a.. 26g) est évaluée comme une erreur et la vitesse et/ou l'accélération de l'unité de préhension (4) est réduite lorsque le nombre d'erreurs par unité de temps dépasse une première valeur-seuil prédéfinie, et/ou est augmentée lorsque le nombre d'erreurs par unité de temps est inférieur à une deuxième valeur-seuil prédéfinie.

11. Procédé selon l'une des revendications 1 à 10, **caractérisé en ce que** le premier support de marchandises et/ou le deuxième support de marchandises est conçu comme un moyen d'aide au chargement (9a..9e) ou un dispositif de transport (10a, 10b, 19, 20a, 20b, 24, 25), le moyen d'aide au chargement (9a..9e) comprenant un fond (27), des parois latérales (28) s'élevant à partir de celui-ci et une ouverture de chargement délimitée par les parois latérales (28).

12. Procédé selon la revendication 11, **caractérisé en ce qu'**une marchandise (26a..26g) du premier type située à proximité d'une paroi latérale (28) du moyen d'aide au chargement (9a.. 9e) est pressée contre ladite paroi latérale (28) lors de son prélèvement, tandis qu'une marchandise (26a.. 26g) du deuxième type, qui est adjacente à une paroi latérale (28) du moyen d'aide au chargement (9a..9e), est retirée du moyen d'aide au chargement (9a..9e) sans pression (p) sur ladite paroi latérale (28) lors du prélèvement.

13. Procédé selon l'une des revendications 1 à 12, **caractérisé en ce que** les marchandises (26a..26g) du premier type et les marchandises (26a..26g) du deuxième type sont prélevées et déposées/larguées à l'aide de la même unité de préhension (4).

14. Procédé selon l'une des revendications 1 à 13, **caractérisé en ce que** les marchandises (26a..26g) sont transportées vers le robot (la, lb) à l'aide du premier support de marchandises (9a, 9c, 9e, 10a, 19, 24) conformément à une commande, sont transbordées à l'aide du robot (la, lb) depuis ou vers le premier support de marchandises (9a, 9c, 9e, 10a, 19, 24) dans ou sur le deuxième support de marchandises (9b, 9d, 10b, 20a, 20b, 25), et sont transportées loin du robot (la, lb) à l'aide du deuxième support de marchandises (9b, 9d, 10b, 20a, 20b, 25).

15. Système robotisé (2a..2d) comprenant
un robot (la, 1b) avec une unité de préhension (4) mobile par rapport à une base de robot (3) et comportant au moins une ventouse (5) pour prélever des marchandises (26a..26g), le robot (la, lb) étant conçu pour prélever des marchandises (26a..26g) à l'aide de l'unité de préhension (4) depuis ou vers un premier support de marchandises (9a, 9c, 9e, 10a, 19, 24) et pour les déposer ou les larguer dans ou sur un deuxième support de marchandises (9b, 9d, 10b, 20a, 20b, 25), et
une commande de robot (11a, 11b) qui est conçue pour ordonner au robot (la, lb) de prélever lesdites marchandises (26a, 26g) sur ou à partir du premier support de marchandises (9a, 9c, 9e, 10a, 19, 24) et pour les déposer ou les larguer dans ou sur le deuxième support de marchandises (9b, 9d, 10b, 20a, 20b, 25),
les marchandises (26a..26g) étant différenciées au moins en ce qui concerne l'un des paramètres physiques suivants : stabilité dimensionnelle, stabilité à la pression, rigidité en flexion, résistance à la traction, poids absolu ou poids spécifique, au moins entre les marchandises (26a..26g) d'un premier type et les marchandises (26a.. 26g) d'un deuxième type,
**caractérisé en ce que**
la commande de robot (11a, 11b) est en outre conçue pour activer la ou les ventouses (5) lors du prélèvement d'une marchandise (26a..26g) du premier type avant que la ou les ventouses (5) n'entrent en contact avec ladite marchandise (26a..26g) et pour activer la ou les ventouses (5) lors du prélèvement d'une marchandise (26a.. 26g) du deuxième type après le contact de l'au moins une ventouse (5) avec ladite marchandise (26a..26g)
dans lequel, si le paramètre physique est la stabilité dimensionnelle, les marchandises du premier type présentent un module d'élasticité inférieur à 1,0 GPa et les marchandises du deuxième type présentent un module d'élasticité supérieur ou égal à 1,0 GPa,
ou
dans lequel, si le paramètre physique est la stabilité à la pression, les marchandises du premier type présentent un module d'élasticité en compression inférieur à 1,0 GPa ou une constante de ressort en compression inférieure à 0,5 N/ cm et les marchandises du deuxième type présentent un module d'élasticité en compression supérieur ou égal à 1,0 GPa ou, en cas de charge centrale, une constante de ressort en compression supérieure ou égale à 0,5 N/cm, ou
lorsque le paramètre physique est la rigidité en flexion, les marchandises du premier type présentent un module d'élasticité inférieur à 1,0 GPa ou une constante de flexion inférieure à 0,01 Nm/°, et les marchandises du deuxième type présentent un module d'élasticité supérieur ou égal à 1,0 GPa ou une constante de flexion supérieure ou égale à 0,01 Nm/°
ou
lorsque le paramètre physique est la résistance à la traction, les marchandises du premier type présentent une résistance à la traction inférieure à 100 N/mm² et les marchandises du deuxième type présentent une résistance à la traction supérieure ou égale à 100 N/mm², ou
dans lequel si le paramètre physique est le poids absolu, les marchandises du premier type présentent un poids inférieur à 1 kg et les marchandises du deuxième type présentent un poids supérieur ou égal à 1 kg, ou
si le paramètre physique est le poids spécifique, les marchandises du premier type présentent un poids spécifique inférieur à 1 g/cm³ et les marchandises du deuxième type présentent un poids spécifique supérieur ou égal à 1 g/cm³.

16. Système robotisé (2a..2d) selon la revendication 15, **caractérisé par** une base de données robotisée (12) dans laquelle sont enregistrés des paramètres de mouvement pour le robot (la, lb) qui sont associés aux paramètres physiques et/ou aux types de marchandises (26a.. 26g) et qui sont prévus pour commander le mouvement du robot (la, lb) et/ou de l'unité de préhension (4).

17. Système de stockage et de préparation de commandes (16) pour la préparation de commandes de marchandises (26a..26g), comprenant une zone de stockage (21) pour le stockage de marchandises (26a.. 26g), un poste de travail pour prélever / reconditionner des marchandises et un système robotisé (2a..2d), **caractérisé en ce que** le système robotisé (2a..2d) est conçu selon la revendication 15 ou 16.

18. Système de stockage et de préparation de commandes (16) selon la revendication 17, **caractérisé en ce que** le poste de travail est conçu pour la préparation entièrement automatisée de commandes de marchandises (26a..26g) et un premier système de convoyage pour le transport de marchandises (26a.. 26g) est agencé dans ou sur des premiers supports de marchandises (9a, 9c, 9e, 10a, 19, 24) entre la zone de stockage (21) et le robot (la, lb) sur le poste de travail et/ou un deuxième système de convoyage est conçu pour le transport des marchandises (26a.. 26g) dans ou sur des deuxièmes supports de marchandises (9b, 9d, 10b, 20a, 20b, 25) entre la zone de stockage (21) et le robot (la, lb) sur le poste de travail, le robot (la, lb) étant conçu pour prélever au moins une marchandise (26a.. 26g) du ou à partir du premier support de marchandises (9a, 9c, 9e, 10a, 19, 24) vers une commande et pour déposer ou larguer l'au moins une marchandise (26a.. 26g) dans ou sur le deuxième support de marchandises (9b, 9d, 10b, 20a, 20b, 25) vers cette commande.
